(19) Europäisches Patentamt
European Patent Office
Office européen des brevets

(11) **EP 4 693 945 A1**

(12) **EUROPEAN PATENT APPLICATION**
published in accordance with Art. 153(4) EPC

(43) Date of publication:
**11.02.2026 Bulletin 2026/07**

(21) Application number: **24795773.1**

(22) Date of filing: **01.04.2024**

(51) International Patent Classification (IPC):
*H04B 7/185* (2006.01)

(52) Cooperative Patent Classification (CPC):
**H04B 7/185; H04B 17/309; H04B 17/327; H04B 17/336**

(86) International application number:
**PCT/CN2024/085179**

(87) International publication number:
**WO 2024/222392 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 CN 202310490007**

(71) Applicant: **Huawei Technologies Co., Ltd.**
**Shenzhen, Guangdong 518129 (CN)**

(72) Inventors:
• **LI, Kexin**
**Shenzhen, Guangdong 518129 (CN)**
• **YU, Tianhang**
**Shenzhen, Guangdong 518129 (CN)**
• **QIAO, Yunfei**
**Shenzhen, Guangdong 518129 (CN)**
• **KONG, Chuili**
**Shenzhen, Guangdong 518129 (CN)**
• **LI, Rong**
**Shenzhen, Guangdong 518129 (CN)**
• **WANG, Jun**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD, DEVICE AND SYSTEM, STORAGE MEDIUM, AND PROGRAM PRODUCT**

(57) Embodiments of this disclosure provide a communication method, apparatus, and system, a computer-readable storage medium, and a computer program product. In the method, a terminal apparatus obtains a first directional parameter, where the first directional parameter is determined based on a first elevation angle and a first azimuth of a line of sight path from a first network apparatus to the terminal apparatus; the terminal apparatus further obtains a second directional parameter, where the second directional parameter is determined based on a second elevation angle and a second azimuth of a line of sight path from a second network apparatus to the terminal apparatus; and the terminal apparatus reports the first directional parameter and the second directional parameter to the first network apparatus. In this way, inter-satellite interference can be suppressed and multi-satellite non-coherent joint transmission performance can be improved in embodiments of this disclosure.

800

Obtain a first directional parameter, where the first directional parameter is determined based on a first elevation angle and a first azimuth of a line of sight path from a first network device to a terminal device — 810

Obtain a second directional parameter, where the second directional parameter is determined based on a second elevation angle and a second azimuth of a line of sight path from a second network device to the terminal device — 820

Report the first directional parameter and the second directional parameter to the first network device — 830

FIG. 8

## Description

This application claims priority to Chinese Patent Application No. 202310490007.5, filed with the China National Intellectual Property Administration on April 28, 2023 and entitled "COMMUNICATION METHOD, APPARATUS, AND SYSTEM, STORAGE MEDIUM, AND PROGRAM PRODUCT", which is incorporated herein by reference in its entirety.

## TECHNICAL FIELD

This disclosure generally relates to the telecommunication field, and more specifically, to a communication method, a communication apparatus, a communication system, a computer-readable storage medium, and a computer program product.

## BACKGROUND

A terrestrial mobile communication network can not only provide users with a high-speed broadband data service, but also provide ultra-reliable low-latency communication for some special applications, and can also support massive machine type communication. This requires not only a higher wireless transmission rate, but also higher network reliability and coverage capabilities. However, a conventional terrestrial mobile communication network can cover only about half of the earth' surface, and a large quantity of users still cannot access the terrestrial mobile communication network. To truly achieve global seamless coverage, construction of a non-terrestrial network (Non-Terrestrial Network, NTN) has been proposed in 5G NR (New Radio, new radio), and satellite communication is an important part of the NTN. Single-satellite transmission provides limited improvement on system capacity. As a scale of a satellite constellation increases, there will be more than one satellite within a visible range of a UE (User Equipment, user equipment). In comparison with single-satellite transmission, multi-satellite coordinated transmission can multiply system performance in an ideal case. Through the multi-satellite coordinated transmission, a requirement on a transmission capability of a single satellite can be reduced, thereby reducing manufacturing costs of a single satellite. The multi-satellite coordinated transmission is a key technology in a future satellite communication system.

## SUMMARY

This disclosure provides a communication method, a communication apparatus, a communication system, a computer-readable storage medium, and a computer program product, to suppress inter-satellite interference and improve multi-satellite non-coherent joint transmission performance.

According to a first aspect, a communication method is provided. The method may be performed by a terminal apparatus. The terminal apparatus is, for example, a terminal device, or a chip used in the terminal device. A first network apparatus in the following descriptions may be specifically a first network device or a chip in the first network device, a second network apparatus may be a second network device or a chip in the second network device, and a third network apparatus may be a third network device or a chip in the third network device. In the method, the terminal apparatus obtains a first directional parameter, where the first directional parameter is determined based on a first elevation angle and a first azimuth of a line of sight path from the first network apparatus to the terminal apparatus; the terminal apparatus obtains a second directional parameter, where the second directional parameter is determined based on a second elevation angle and a second azimuth of a line of sight path from the second network apparatus to the terminal apparatus; and the terminal apparatus reports the first directional parameter and the second directional parameter to the first network apparatus. In this manner, inter-satellite interference is suppressed, and multi-satellite non-coherent joint transmission performance is improved.

In some implementations, the first directional parameter is a first reference signal received directional cosine (RSRDC) determined based on the first elevation angle and the first azimuth, and the second directional parameter is a second RSRDC determined based on the second elevation angle and the second azimuth. The introduced new measurement parameter enables the terminal apparatus to obtain direction information of a received signal.

In some implementations, the first directional parameter includes a product of a cosine of the first elevation angle and a cosine of the first azimuth, and a product of the cosine of the first elevation angle and a sine of the first azimuth; and the second directional parameter includes a product of a cosine of the second elevation angle and a cosine of the second azimuth, and a product of the cosine of the second elevation angle and a sine of the second azimuth. In this manner, the measurement parameter can reflect the direction information of the received signal.

In some implementations, obtaining the first directional parameter and the second directional parameter includes: The terminal apparatus obtains the first directional parameter in a process of synchronizing with the first network apparatus; and the terminal apparatus obtains the second directional parameter in a process of synchronizing with the second network apparatus.

In some implementations, the method further includes: In a process of obtaining the first directional parameter, the terminal apparatus further obtains at least one of first reference signal received power (RSRP), first reference signal received quality (RSRQ), or a first signal-to-interference-plus-noise ratio (SINR) that corresponds to the first network apparatus; and in a process of obtaining the second directional parameter, the terminal apparatus further obtains at least one of second RSRP, second RSRQ, or a second SINR that corresponds to the second network apparatus.

In some implementations, after accessing the first network apparatus, the terminal apparatus reports the first RSRDC and the second RSRDC to the first network apparatus when a trigger condition is satisfied. In this manner, resource overheads for reporting by the terminal apparatus can be reduced.

In some implementations, the trigger condition is determined based on at least one of the following: a condition determined based on inter-network apparatus isolation that is determined based on the first RSRDC and the second RSRDC; or a condition determined based on at least one of the first RSRDC, the first RSRP, the first RSRQ, or the first SINR that corresponds to the first network apparatus and at least one of the second RSRDC, the second RSRP, the second RSRQ, or the second SINR that corresponds to the second network apparatus. The resource overheads for reporting by the terminal apparatus can be reduced based on the trigger condition.

In some implementations, the terminal apparatus further reports at least one of the following: at least one of the first RSRP, the first RSRQ, or the first SINR; or at least one of the second RSRP, the second RSRQ, or the second SINR.

In some implementations, the method further includes: The terminal apparatus receives configuration information from the first network apparatus, where the configuration information includes information about the second network apparatus.

In some implementations, the configuration information further includes an indication of a parameter to be reported by the terminal apparatus, and the parameter to be reported includes an RSRDC, so that the parameter to be reported is configured on a network side.

In some implementations, the configuration information further includes a trigger threshold, so that the threshold in the reported trigger condition can be configured on the network side.

In some implementations, the trigger condition is satisfied after a start condition for starting the reporting is satisfied and before an end condition for stopping the reporting is satisfied. The trigger threshold is a first trigger threshold, the start condition is that $\delta + Hys1$ is less than the first trigger threshold, and the end condition is that $\delta - Hys1$ is greater than the first trigger threshold, where $\delta$ is the inter-network apparatus isolation that is determined based on the first RSRDC and the second RSRDC, and $Hys1$ is a preconfigured or preset first hysteresis parameter; the trigger threshold includes a first threshold and a second threshold, the start condition is that $M_a + Of_a + O_{ca} - Hys2$ is greater than the first threshold and $M_b + Ofb + Ocb - Hys3$ is greater than the second threshold, and the end condition is that $M_a + Ofa + Oca + Hys2$ is less than the first threshold or $M_b + Ofb + Ocb + Hys3$ is less than the second threshold, where $M_a$ is at least one of the first RSRP, the first RSRQ, or the first SINR, $M_b$ is at least one of the second RSRP, the second RSRQ, or the second SINR, $Of a$ is an offset parameter related to $M_a$, $Ofb$ is an offset parameter related to $M_b$, $Oca$ is an offset parameter related to a cell of the first network apparatus, $Ocb$ is an offset parameter related to a cell of the second network apparatus, $Hys2$ is a preconfigured or preset second hysteresis parameter, $Hys3$ is a preconfigured or preset third hysteresis parameter, and none of $Ofa$, $Ofb$, $Oca$, and $Ocb$ is zero or at least one of $Ofa$, $Ofb$, $Oca$, or $Ocb$ is zero; or the trigger threshold is a second trigger threshold, the start condition is that $\|\psi_a - \psi_b\|^2 + Hys4$ is less than the second trigger threshold, and the end condition is that $\|\psi_a - \psi_b\|^2 - Hys4$ is greater than the second trigger threshold, where $\|\psi_a - \psi_b\|^2$ is a directional cosine distance between the first network apparatus and the second network apparatus, $\psi_a$ is the first RSRDC, $\psi_b$ is the second RSRDC, and $Hys4$ is a preconfigured or preset fourth hysteresis parameter. Resource overheads for reporting by the terminal apparatus are reduced, and the multi-satellite NCJT performance is effectively improved.

In some implementations, the method further includes: The terminal apparatus determines a space domain receiver based on the first directional parameter and the second directional parameter, where the space domain receiver is configured to receive signals sent by the first network apparatus and the second network apparatus, and the space domain receiver is one or more of a space domain matched filter receiver, a space domain zero forcing receiver, or a space domain minimum mean square error receiver. In this way, the terminal apparatus can design the space domain receiver by using a plurality of antennas and a plurality of radio frequency links, to suppress inter-subcarrier interference, thereby effectively improving the multi-satellite NCJT performance.

According to a second aspect, a communication method is provided. The method may be performed by a first network apparatus. The first network apparatus may be a first network device, or may be a chip used in the first network device. In the method, the first network apparatus receives a first directional parameter and a second directional parameter from a terminal apparatus, where the first directional parameter is determined based on a first elevation angle and a first azimuth of a line of sight path from the first network apparatus to the terminal apparatus, and the second directional parameter is determined based on a second elevation angle and a second azimuth of a line of sight path from a second network apparatus to the terminal apparatus.

In some implementations, the first directional parameter is a first reference signal received directional cosine (RSRDC) determined based on the first elevation angle and the first azimuth, and the second directional parameter is a second RSRDC determined based on the second elevation angle and the second azimuth.

In some implementations, the first directional parameter includes a product of a cosine of the first elevation angle and a cosine of the first azimuth, and a product of the cosine of the first elevation angle and a sine of the first azimuth; and the second directional parameter includes a product of a cosine of the second elevation angle and a cosine of the second azimuth, and a product of the cosine of the second elevation angle and a sine of the second azimuth.

In some implementations, the method further includes: The first network apparatus reports the first directional parameter and the second directional parameter to a third network apparatus.

In some implementations, the first network apparatus further receives, from the terminal apparatus, at least one of first RSRP, first RSRQ, or a first SINR that corresponds to the first network apparatus, and at least one of second RSRP, second RSRQ, or a second SINR that corresponds to the second network apparatus.

In some implementations, the method further includes: The first network apparatus reports at least one of the first RSRP, the first RSRQ, or the first SINR, and at least one of the second RSRP, the second RSRQ, or the second SINR to the third network apparatus.

In some implementations, the method further includes: The first network apparatus sends configuration information to the terminal apparatus, where the configuration information includes information about the second network apparatus.

In some implementations, the configuration information further includes an indication of a parameter to be reported by the terminal apparatus, and the parameter to be reported includes an RSRDC.

In some implementations, the configuration information further includes a trigger threshold, and the trigger threshold is used by the terminal apparatus to determine a trigger condition for triggering reporting of the first directional parameter and the second directional parameter.

According to a third aspect, a communication method is provided. The method may be performed by a third network apparatus, or may be performed by a chip used in the third network apparatus. The following provides descriptions by using an example in which an execution body is the third network apparatus. In the method, the third network apparatus receives, from a first network apparatus, a first directional parameter and a second directional parameter that are obtained by a terminal apparatus, where the first directional parameter is determined based on a first elevation angle and a first azimuth of a line of sight path from the first network apparatus to the terminal apparatus, and the second directional parameter is determined based on a second elevation angle and a second azimuth of a line of sight path from a second network apparatus to the terminal apparatus; and the third network apparatus schedules, based on the first directional parameter and the second directional parameter, the second network apparatus to serve the terminal apparatus.

According to a fourth aspect, a communication apparatus is provided. For beneficial effects, refer to descriptions of the first aspect. Details are not described herein again. The apparatus has functions of implementing actions in the method example in the first aspect. The function may be implemented by hardware, or may be implemented by executing corresponding software by hardware. The hardware or software includes one or more modules corresponding to the foregoing functions. In a possible design, the communication apparatus includes: an obtaining unit, configured to obtain a first directional parameter, where the first directional parameter is determined based on a first elevation angle and a first azimuth of a line of sight path from a first network apparatus to a terminal apparatus, where the obtaining unit is further configured to obtain a second directional parameter, where the second directional parameter is determined based on a second elevation angle and a second azimuth of a line of sight path from a second network apparatus to the terminal apparatus; and a sending unit, configured to report the first directional parameter and the second directional parameter to the first network apparatus.

According to a fifth aspect, a communication apparatus is provided. For beneficial effects, refer to descriptions of the second aspect. Details are not described herein again. The apparatus has functions of implementing actions in the method example in the second aspect. The function may be implemented by hardware, or may be implemented by executing corresponding software by hardware. The hardware or software includes one or more modules corresponding to the foregoing functions. In a possible design, the communication apparatus includes: a receiving unit, configured to receive a first directional parameter and a second directional parameter from a terminal apparatus, where the first directional parameter is determined based on a first elevation angle and a first azimuth of a line of sight path from a first network apparatus to the terminal apparatus, and the second directional parameter is determined based on a second elevation angle and a second azimuth of a line of sight path from a second network apparatus to the terminal apparatus.

According to a sixth aspect, a communication apparatus is provided. For beneficial effects, refer to descriptions of the third aspect. Details are not described herein again. The apparatus has functions of implementing actions in the method example in the third aspect. The function may be implemented by hardware, or may be implemented by executing corresponding software by hardware. The hardware or software includes one or more modules corresponding to the foregoing functions. In a possible design, the communication apparatus includes: a receiving unit, configured to receive, from a first network apparatus, a first directional parameter and a second directional parameter that are obtained by a terminal apparatus, where the first directional parameter is determined based on a first elevation angle and a first azimuth of a line of sight path from the first network apparatus to the terminal apparatus, and the second directional parameter is determined based on a second elevation angle and a second azimuth of a line of sight path from a second network apparatus to the terminal apparatus; and a scheduling unit, configured to schedule, based on the first directional parameter and the second directional parameter, the second network apparatus to serve the terminal apparatus.

According to a seventh aspect, a communication apparatus is provided, including: a processor and a memory storing instructions. When the instructions are executed by the processor, an electronic device is enabled to perform the method according to any one of the first aspect and the implementations of the first aspect.

According to an eighth aspect, a communication apparatus is provided, including: a processor and a memory storing instructions. When the instructions are executed by the processor, an electronic device is enabled to perform the method according to any one of the second aspect and the implementations of the second aspect.

According to a ninth aspect, a communication apparatus is provided, including: a processor and a memory storing instructions. When the instructions are executed by the processor, an electronic device is enabled to perform the method according to any one of the third aspect and the implementations of the third aspect.

According to a tenth aspect, a computer-readable storage medium is provided, where the computer-readable storage medium stores instructions. When the instructions are executed by an electronic device, the electronic device is enabled to perform the method performed by the terminal apparatus, the first network apparatus, or the third network apparatus in the foregoing aspects.

According to an eleventh aspect, a computer program product is provided, where the computer program product includes instructions. When the instructions are executed by an electronic device, the electronic device is enabled to perform the method performed by the terminal apparatus, the first network apparatus, or the third network apparatus in the foregoing aspects.

According to a twelfth aspect, this disclosure provides a chip system. The chip system includes a processor, configured to implement a function of the terminal apparatus, the first network apparatus, or the third network apparatus in the methods in the foregoing aspects. In a possible design, the chip system further includes a memory, configured to store program instructions and/or data. The chip system may include a chip, or may include the chip and another discrete component.

According to a thirteenth aspect, this disclosure further provides a communication system, including: a terminal apparatus configured to perform the method in the first aspect, a first network apparatus configured to perform the method in the second aspect, or a third network apparatus configured to perform the method in the third aspect.

## BRIEF DESCRIPTION OF DRAWINGS

FIG. 1A is a diagram of a communication system according to some embodiments of this disclosure;
FIG. 1B is a diagram of a multi-satellite communication system according to some embodiments of this disclosure;
FIG. 2 is a schematic flowchart of communication according to some embodiments of this disclosure;
FIG. 3 is a diagram of an AOA of a LOS path on a terminal device side according to some embodiments of this disclosure;
FIG. 4 is a diagram of a start condition and an end condition for reporting according to some embodiments of this disclosure;
FIG. 5 is a diagram of a start condition and an end condition for reporting according to some other embodiments of this disclosure;
FIG. 6 is a diagram of a receiving procedure in space domain according to some other embodiments of this disclosure;
FIG. 7 is a diagram of a receiving procedure in space domain according to some other embodiments of this disclosure;
FIG. 8 is a schematic flowchart of implementation at a terminal device according to some embodiments of this disclosure;
FIG. 9 is a schematic flowchart of implementation at a first network device according to some embodiments of this disclosure;
FIG. 10 is a schematic flowchart of implementation at a third network device according to some embodiments of this disclosure;
FIG. 11 is a diagram of main composition of an example device in a possible implementation according to an embodiment of this disclosure; and
FIG. 12 is a simplified block diagram of an example device in a possible implementation according to an embodiment of this disclosure.

## DESCRIPTION OF EMBODIMENTS

Embodiments of this disclosure are described in more detail in the following with reference to accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of this disclosure may be implemented according to any proper communication protocol, including but not limited to cellular communication protocols such as 3rd generation (3rd Generation, 3G), 4th generation (4G), 5th generation (5G), and future communication protocols (for example, 6th generation (6G)), wireless local area network communication protocols such as the Institute of Electrical and Electronics Engineers (Institute of Electrical and Electronics Engineers, IEEE) 802.11, and/or any other protocols currently known or developed in future.

Technical solutions in embodiments of this disclosure are applied to a communication system that complies with any proper communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access 2000, CDMA2000) system, a time division-synchronous code division multiple access (Time Division-Synchronous Code Division Multiple Access, TD-SCDMA) system, a frequency division duplex (Frequency Division Duplex, FDD) system, time division duplex (Time Division Duplex, TDD), a 5th generation (5G) system (for example, new radio (New Radio, NR)), and a future communication system (for example, a 6th generation (6G) system).

For the purpose of illustration, the following describes embodiments of this disclosure in the context of a 5G communication system in 3GPP. However, it should be understood that embodiments of this disclosure are not limited to the communication system, but may be applied to any communication system having a similar problem, for example, a wireless local area network (WLAN), a wired communication system, or another communication system developed in the future.

The term "terminal" or "terminal device" used in this disclosure is any terminal device that can perform wired or wireless communication with a network device or between terminal devices. The terminal device may be sometimes referred to as a user equipment (User Equipment, UE). The terminal device may be any type of mobile terminal, fixed terminal, or portable terminal. The terminal device may be various wireless communication devices that have a wireless communication function. With emergence of an internet of things (Internet of Things, IOT) technology, more devices that previously have no communication function, for example without limitation to, a household appliance, a transportation tool, a tool device, a service device, and a service facility, start to obtain a wireless communication function by being configured with a wireless communication unit, so as to access a wireless communication network, and accept remote control. Such devices have the wireless communication function because the devices are configured with the wireless communication unit, and therefore also belong to the scope of wireless communication devices. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a wireless data card, a wireless modulator demodulator (Modulator demodulator, Modem), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device (for example, a smart watch), a terminal device in a 5G network or any terminal device in an evolved public land mobile network (Public Land Mobile Network, PLMN), another device that can be used for communication, or any combination thereof. This is not limited in embodiments of this disclosure.

The term "network node" or "network device" used in this disclosure is an entity or a node that may be configured to communicate with the terminal device, for example, may be an access network device. The access network device may be an apparatus that is deployed in a radio access network and that provides a wireless communication function for a mobile terminal, for example, may be a radio access network (Radio Access Network, RAN) network device. The access network device may include various types of base stations. The base station is configured to provide a radio access service for the terminal device. Specifically, each base station corresponds to one service coverage area, and a terminal device entering the area may communicate with the base station through a radio signal, to receive a radio access service provided by the base station. Service coverage areas of base stations may overlap, and a terminal device in an overlapping area may receive radio signals from a plurality of base stations. Therefore, all of the plurality of base stations may provide services for the terminal device. Based on a size of the provided service coverage area, the access network device may include a macro base station providing a macro cell (Macro cell), a micro base station providing a micro cell (Pico cell), a pico base station providing a pico cell, and a femto base station providing a femto cell (Femto cell). In addition, the access network device may alternatively include various forms of relay stations, access points, remote radio units (Remote Radio Units, RRUs), radio-frequency heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, may be referred to as a gNodeB (gNB) or an NR NodeB (NR NB) in a 5G network, and the like. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. Alternatively, the CU and the DU may be different components in one rack. For ease of description, in subsequent embodiments of this disclosure, the foregoing apparatuses that provide a wireless communication function for the mobile terminal are collectively referred to as the network device. The apparatus may alternatively be a chip or a module that is in the mobile terminal or the access network device and that implements a related wireless communication function. This is not specifically limited in embodiments of this disclosure.

To truly achieve global seamless coverage, construction of an NTN has been proposed in 5G NR, and satellite communication is an important part of the NTN. Satellites can be classified into GEO (Geostationary Earth Orbit, geostationary earth orbit) satellites, MEO (Medium Earth Orbit, medium earth orbit) satellites, and LEO (Low Earth Orbit, low earth orbit) satellites based on orbit altitudes. In comparison with the GEO and MEO satellites, the LEO satellites have a shorter transmission latency, lower path loss, and lower launch costs. Since the 1990s, the LEO satellites have been used for providing basic personal communication services for global users, but a communication rate is limited. In recent years, the LEO satellites have regained attention due to development of technologies such as wireless communication, integrated circuits, and reusable rockets. Currently, giant LEO satellite constellations are being built to provide high-speed network services that can compete with that of terrestrial networks for the global users.

In terrestrial mobile communication, system performance can be improved through multi-base station coordination. Main methods for implementing the multi-base station coordination in the terrestrial mobile communication include dynamic point selection (Dynamic Point Selection, DPS), coordinated schedule (Coordinated Schedule, CS), coordinated beamforming (Coordinated Beamforming, CBF), coherent joint transmission (Coherent Joint Transmission, CJT), and non-coherent joint transmission (Non-Coherent Joint Transmission, NCJT). The DPS is used for dynamically selecting a base station in a time dimension to serve a UE. Therefore, different base stations in the DPS use different time resources. In the CS, different time-frequency resources are scheduled to different base stations at the same time. Therefore, different base stations in the DPS use different frequency resources. To further improve a system capacity, different base stations may use a same time-frequency resource to serve a UE, which includes two manners: One manner is that there is only one base station that sends a desired signal to each UE; and the other manner is that there are a plurality of base stations that send desired signals to each UE. When there is only one base station that sends the desired signal to each UE, a UE at a cell border receives a desired signal from a base station of a primary cell and an interference signal from a base station of a neighboring cell at the same time. The CBF may be used for coordinating a beamforming vector of the neighboring cell to suppress interference from the base station of the neighboring cell to a UE in the primary cell. When there are the plurality of base stations that can send the desired signals to each UE, there are two transmission modes: the CJT and the NCJT. In the CJT, different base stations send a same desired signal to the UE. This requires ideal backhaul between the base stations to perform coherent precoding, so that different base stations behave as if one base station serves the UE. The CJT can achieve the best system performance, but has high implementation difficulty. In the NCJT, different base stations send different desired signals to the UE. This relaxes a requirement on backhaul between the base stations. Each base station independently sends a respective data stream, and the coherent precoding does not need to be implemented. Although the NCJT has specific performance loss compared with the CJT, the implementation difficulty can be reduced to some extent. In the satellite communication, satellites are far away from each other, and it is difficult to ensure ideal inter-satellite backhaul. Consequently, it is difficult to implement the CJT. In comparison with the CJT, the NCJT relaxes a requirement on the ideal inter-satellite backhaul, and is easier to implement in an actual system.

Multi-satellite NCJT in the satellite communication is significantly different from multi-base station NCJT in the terrestrial mobile communication. Orthogonal frequency division multiplexing (Orthogonal Frequency Division Multiplexing, OFDM) is used for both 5G NR terrestrial mobile communication and the NTN, as a modulation technology. The following uses an OFDM system as an example to describe differences between the multi-satellite NCJT in the satellite communication and the multi-base station NCJT in the terrestrial mobile communication. First, because ground base stations are close to each other, a latency difference between signals sent by different base stations arriving at a UE side is small, and can be protected by a cyclic prefix (Cyclic Prefix, CP). In addition, because the ground base stations are stationary and only the UE moves at a low speed, a Doppler frequency shift difference between signals sent by different base stations arriving at the UE side is small, and the Doppler frequency shift difference can be protected by a subcarrier spacing. In this way, inter-subcarrier interference is not generated when the signals sent by different base stations arrive at the UE side, and the UE can use a frequency domain receiver to process the signals from different base stations. However, in the satellite communication, because a distance between a satellite and the ground is long and the satellite is always in a high-speed moving state, a latency difference between signals sent by different satellites arriving at a UE side may far exceed the CP, and a Doppler frequency shift difference between signals sent by different satellites arriving at the UE side may be in a same order of magnitude as a subcarrier spacing. Consequently, severe inter-subcarrier interference is generated when the signals sent by different satellites arrive at the UE side, and the UE cannot use a conventional frequency domain receiver to process the signals from different satellites. In conclusion, due to an inherent feature of a satellite channel, severe inter-subcarrier interference may be generated on the UE side when the multi-base station NCJT in the terrestrial mobile communication is directly applied to the multi-satellite NCJT in the satellite communication, severely degrading system performance. In other words, a multi-base station NCJT technology in the terrestrial mobile communication cannot resolve problems encountered in the multi-satellite NCJT in the satellite communication.

The multi-satellite NCJT in the satellite communication can be better supported in embodiments of this disclosure. To make objectives, technical solutions, and advantages of this disclosure clearer, the following further describes this disclosure in detail with reference to accompanying drawings. A specific operation method, a function description, and the like in a method embodiment may also be applied to an apparatus embodiment or a system embodiment.

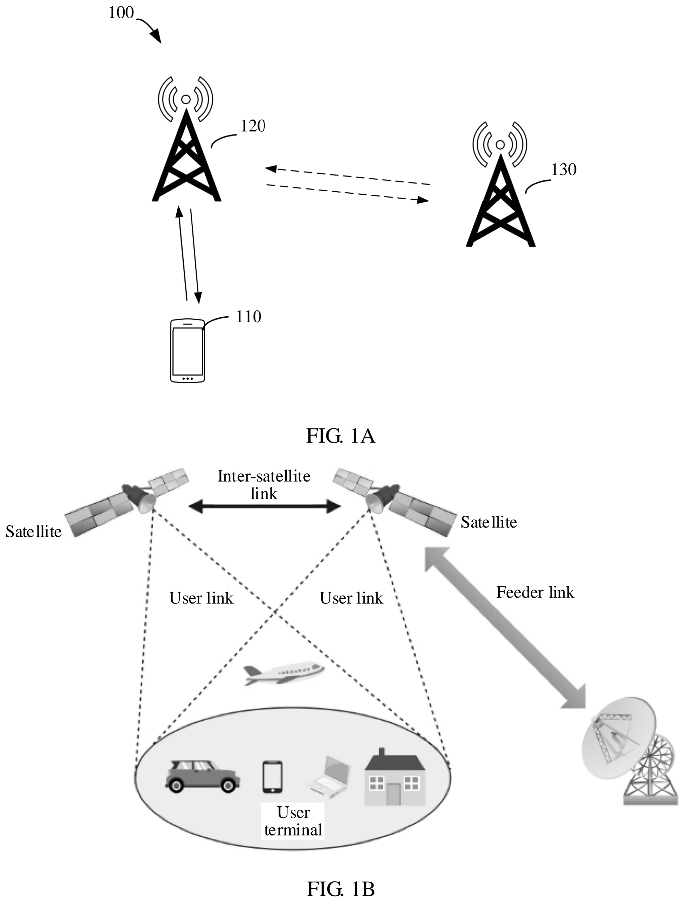

As shown in FIG. 1A, a system 100 includes a terminal device 110 and a network device 120. The terminal device 110 may communicate with the network device 120. In some embodiments, the system 100 may further include another network device (not shown in the figure). The terminal device 110 may receive signals from the network device 120 (which may be referred to as a first network device) and the another network device (which may be referred to as a second network device). In some embodiments, for example, in a multi-satellite coordinated transmission scenario, the network device 120 and the another network device may be satellite devices, such as base stations in satellites or chips or modules disposed in the base stations in the satellites. In some embodiments, the system 100 may further include a network device 130 (which may be referred to as a third network device 130). In some embodiments, the network device 130 may be a ground base station or a satellite device. The network device 130 may communicate with the network device 120. For example, the network device 130 schedules the network device 120, so that the network device 120 serves the terminal device 110.

It should be understood that the foregoing network device may be a network device in various network systems. For example, the network device 130 may be any device having a wireless transceiver function. The network device 130 includes but is not limited to: a conventional macro base station eNB (evolved NodeB) in a conventional UMTS/LTE (Universal Mobile Telecommunications system, universal mobile telecommunications system/Long Term Evolution, long term evolution) wireless communication system, a micro base station eNB in a HetNet (Heterogeneous Network, heterogeneous network) scenario, a baseband processing unit BBU (for example, Baseband Unit, baseband unit) and a radio frequency unit RRU (Remote Radio Unit, remote radio unit) in a distributed base station scenario, a baseband pool BBU pool and a radio frequency unit RRU in a CRAN (Cloud Radio Access Network, cloud radio access network) scenario, a gNB in a future wireless communication system, an evolved base station in 3GPP, an access node in a Wi-Fi system, a wireless relay node, a wireless backhaul node, and the like. The base station may be a macro base station, a micro base station, a picocell base station, a small cell, a relay station, a balloon station, or the like. The network device 130 may alternatively be a server, a wearable device, a vehicle-mounted device, or the like.

The terminal device 110 may alternatively be various user communication devices, for example, may be a vehicle-mounted communication module or another embedded communication module, a mobile phone (mobile phone), a tablet (for example, Pad), a computer having a wireless transceiver function, a virtual reality (VR) terminal device 110, an augmented reality (AR) terminal device 110, a wireless terminal in industrial control (industrial control), a tactile terminal device 110, a vehicle-mounted terminal device 110, a wireless terminal in self driving, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or a wearable terminal device 110.

FIG. 1B is a diagram of a multi-satellite communication system according to some embodiments of this disclosure. As shown in FIG. 1B, the multi-satellite communication system to which the solutions in embodiments of this disclosure are applicable is shown. In some embodiments, the system may include a satellite device (referred to as a satellite for short), a UE (that is, a user terminal), and a gateway (Gateway, GW). A link between the satellite and a user is referred to as a user link. A link between the satellite and the GW is referred to as a feeder link. A link between satellites is referred to as an ISL (Inter-Satellite Link, inter-satellite link). With reference to FIG. 1A, the network device 120 may be a satellite device shown in FIG. 1B, and the terminal device 110 may be a user terminal shown in FIG. 1B. The satellite device may be equipped with a transparent payload or a regenerative payload. When the satellite is equipped with the transparent payload, the satellite has only functions of frequency conversion and signal amplification for an analog signal. The satellite serves only as a signal repeater or transponder, and the GW has functions of a base station or some functions of a base station. In this case, the GW can be considered as a base station. When the satellite is equipped with the regenerative payload, the satellite has a capability of performing digital processing on a signal, and has functions of a base station or some functions of a base station. In this case, the satellite may be considered as a base station. The UE includes a handheld terminal and a fixed terminal, or may be another form of terminal, for example, an airplane, a vehicle, or a notebook computer. This is not limited in embodiments of this disclosure. The solutions in embodiments of this disclosure relate to a case in which the UE performs parameter measurement on the user link, and reports a measurement result to the satellite, and the satellites exchange the measurement result through the inter-satellite link, or the satellite sends the measurement result back to the gateway through the feeder link.

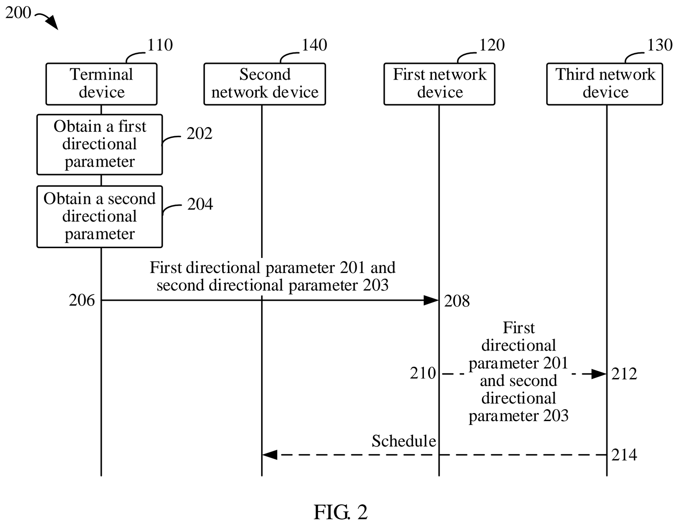

FIG. 2 is a schematic flowchart of an example of a communication method according to an embodiment of this disclosure. As shown in FIG. 2, in an example procedure 200 of the communication method in some embodiments of this disclosure, a terminal device 110 obtains (202) a first directional parameter 201, where the first directional parameter 201 may be determined based on a first elevation angle and a first azimuth of a line of sight path from a first network device 120 to the terminal device 110. Specifically, the terminal device 110 may obtain the first directional parameter 201 from the first network device 120. For example, in some examples, the terminal device 110 may obtain the first directional parameter 201 in a process of synchronizing with the first network device 120.

It should be noted that the first network device 120 in this embodiment of this disclosure may be a specific implementation of a first network apparatus. In some embodiments, the first network device may be replaced with a chip in the first network device (another specific implementation of the first network apparatus). A third network device 130 may be a specific implementation of a third network apparatus. In some embodiments, the third network device 130 may be replaced with a chip in the third network device 130 (another specific implementation of the third network apparatus). A second network device 140 may be a specific implementation of a second network apparatus. In some embodiments, the second network device 140 may be replaced with a chip in the second network device 140 (another specific implementation of the second network apparatus). The terminal device 110 may be a specific implementation of a terminal apparatus. In some embodiments, the terminal device 110 may be replaced with a chip in the terminal device 110 (another specific implementation of the terminal apparatus).

The following uses an example in which the terminal device 110 is a UE and the network device is a satellite device (referred to as a satellite for short) for description. Angle of arrival (Angle Of Arrival, AOA) information of line of sight (Line Of Sight, LOS) paths of different satellites is required for implementing a space domain receiver on a UE side. In solutions of some embodiments of this disclosure, a new measurement parameter, namely, a reference signal received directional cosine (Reference Signal Received Directional Cosine, RSRDC), is introduced as the first directional parameter 201. The RSRDC can completely reflect the AOA information, while a measurement parameter RSRP, RSRQ, or an SINR can only reflect energy information of a received signal, and cannot reflect direction information of the received signal. Because the new measurement parameter RSRDC is introduced in embodiments of this disclosure, the UE can obtain the direction information of the received signal.

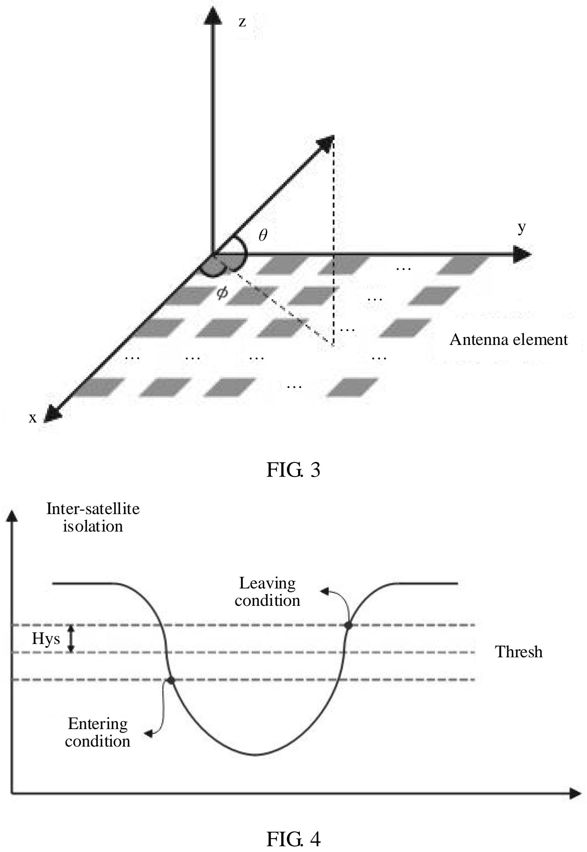

As an example of determining the first directional parameter 201, a first reference signal received directional cosine (RSRDC) may be determined based on the first elevation angle and the first azimuth. Specifically, for example, the first directional parameter 201 may include a product of a cosine of the first elevation angle and a cosine of the first azimuth, and a product of the cosine of the first elevation angle and a sine of the first azimuth. The first elevation angle is an elevation angle of the line of sight path from the first network device 120 to the terminal device 110, and the first azimuth is an azimuth of the line of sight path from the first network device 120 to the terminal device 110. The following further describes the method for determining the first directional parameter 201 with reference to FIG. 3.

FIG. 3 is a diagram of an AOA of a LOS path on a terminal device 110 side according to some embodiments of this disclosure. Assuming that the UE side is configured with a uniform planar array (Uniform Planar Array, UPA), and the UPA on the UE side is placed on an xoy plane, the AOA of the LOS path on the UE side may be represented as $(\theta, \phi)$, where $\Theta$ is an elevation angle, and $\phi$ is an azimuth. A parameter RSRDC is defined as a reference signal received directional cosine (referred to as a direction cosine for short) $\psi = (\psi_x, \psi_y)$, where $\psi_x = \cos\theta\cos\phi$ and $\psi_y = \cos\theta\sin\phi$. Refer to FIG. 3. If $\Theta$ is a first elevation angle and $\phi$ is a first azimuth, a first RSRDC may be determined based on $\psi = (\psi_x, \psi_y)$. The direction cosine $\psi = (\psi_x, \psi_y)$ can completely reflect information about the AOA, that is, $(\theta, \phi)$. For the given direction cosine $\psi = (\psi_x, \psi_y)$, an array response vector on the UE side is defined as $d(\psi)$, which depends only on an arrangement of antenna elements on the UE side. A dimension of the array response vector $d(\psi)$ is equal to a quantity of antenna units on the UE side. For example, if the UPA is configured on the UE side, quantities of antennas along an x axis and a y axis are $N_x$ and $N_y$ respectively, spacings between antennas along the x axis and the y axis are $u_x$ and $u_y$ respectively, and a carrier wavelength is $\lambda$. The array response vector $d(\psi)$ may be represented as $d(\psi) = d_x(\psi_x) \otimes d_y(\psi_y)$, where

$$d_x(\psi_x) = (1, e^{j2\pi u_x \psi_x/\lambda}, ..., e^{j2\pi u_x(N_x-1)\psi_x/\lambda})/\sqrt{N_x}$$ and

$$d_y(\psi_y) = (1, e^{j2\pi u_y \psi_y/\lambda}, ..., e^{j2\pi u_y(N_y-1)\psi_y/\lambda})/\sqrt{N_y} .$$

Still refer to FIG. 2. The terminal device 110 may obtain (204) a second directional parameter 203. Specifically, in some examples, the terminal device 110 may obtain the second directional parameter 203 in a process of synchronizing with the second network device 140. The second directional parameter 203 may be determined based on a second elevation angle and a second azimuth of a line of sight path from the second network device 140 to the terminal device 110. For example, similar to the manner of determining the first directional parameter 201, the terminal device 110 may determine a second RSRDC based on the second elevation angle and the second azimuth. An implementation of determining the second RSRDC is determining the second RSRDC based on a product of a cosine of the second elevation angle and a cosine of the second azimuth, and a product of the cosine of the second elevation angle and a sine of the second azimuth. In other words, the second directional parameter 203 may include the product of the cosine of the second elevation angle and the cosine of the second azimuth, and the product of the cosine of the second elevation angle and the sine of the second azimuth. Refer to FIG. 3. If $\theta$ is a second elevation angle and $\phi$ is a second azimuth, a second RSRDC may be determined based on $\psi = (\psi_x, \psi_y)$.

In solutions of some other embodiments of this disclosure, the foregoing parameter RSRDC may be replaced with another function related to $(\theta, \phi)$, for example, $\gamma = (\gamma_x, \gamma_y)$, where $\gamma_x = \sin\theta \cos\phi$ and $\gamma_y = \sin\theta \sin\phi$. A relationship between the parameter $\gamma = (\gamma_x, \gamma_y)$ and $\psi = (\psi_x, \psi_y)$ is: $\psi_x = \sqrt{1 - \gamma_x^2 - \gamma_y^2} \cos\left(\arctan\frac{\gamma_y}{\gamma_x}\right)$ and $\psi_y = \sqrt{1 - \gamma_x^2 - \gamma_y^2} \sin\left(\arctan\frac{\gamma_y}{\gamma_x}\right)$. In this way, the array response vector d($\psi$) can still be calculated based on the parameter $\gamma = (\gamma_x, \gamma_y)$. The new measurement parameter introduced in this manner may also enable the UE to obtain the direction information of the received signal.

In solutions of some other embodiments of this disclosure, the foregoing parameter RSRDC may be replaced with another function related to $(\theta, \phi)$, for example, $\beta = (\beta_x, \beta_y)$, where $\beta_x = \cos\theta \cos\phi$ and $\beta_y = \sin\theta \sin\phi$. A relationship between the parameter $\beta = (\beta_x, \beta_y)$ and $\psi = (\psi_x, \psi_y)$ is: $\psi_x = \beta_x$ and $\psi_y = \sin\left(\frac{\arccos(\beta_x-\beta_y)+\arccos(\beta_x+\beta_y)}{2}\right) \sin\left(\frac{\arccos(\beta_x-\beta_y)-\arccos(\beta_x+\beta_y)}{2}\right)$. In this way, the array response vector $d(\psi)$ can still be calculated based on the parameter $\beta = (\beta_x, \beta_y)$. The new measurement parameter introduced in this manner may also enable the UE to obtain the direction information of the received signal.

In addition to obtaining the directional parameter, for example, the RSRDC, the terminal device 110 may further obtain one or more other measurement parameters such as reference signal received power (RSRP), reference signal received quality (RSRQ), or a signal-to-interference-plus-noise ratio (SINR). For example, in a process of obtaining the first directional parameter 201, the terminal device 110 may further obtain one or more measurement parameters such as first reference signal received power (RSRP), first reference signal received quality (RSRQ), or a first signal-to-interference-plus-noise ratio (SINR) that corresponds to the first network device 120.

For example, two satellites (denoted as a satellite A and a satellite B) provide services for a plurality of UEs in an area at the same time, the UE has a GNSS capability, and a UE side is equipped with a plurality of antennas and a plurality of radio frequency links. Without loss of generality, it is assumed that both the two satellites are equipped with regenerative payloads, and the satellites have functions of a base station or some functions of a base station. In this case, the satellites may be considered as base stations. The satellite A is used as an example of the first network device 120, and the satellite B is used as an example of the second network device 140. A UE is used as an example of the terminal device 110. Upon power-on, the UE first detects a synchronization signal block (Synchronization Signal Block, SSB) of the satellite A, synchronizes with the satellite A, and obtains a physical cell identifier (Physical Cell ID, PCI) of the satellite A. In this process, the UE measures reference signal received power (Reference Signal Received Power, RSRP), reference signal received quality (Reference Signal Received Quality, RSRQ), a signal-to-interference-plus-noise ratio (Signal-to-Interference-plus-Noise Ratio, SINR), and an RSRDC by using a secondary synchronization signal (Secondary Synchronization Signal, SSS) of the satellite A.

In a process of obtaining the second directional parameter 203, the terminal device 110 further obtains one or more measurement parameters such as second RSRP, second RSRQ, or a second SINR that corresponds to the second network device 140.

The following describes a process in which the terminal device 110 obtains one or more measurement parameters such as the second directional parameter 203, the second RSRP, the second RSRQ, or the second SINR based on the foregoing example.

For example, the UE accesses the satellite A through a physical random access channel (Physical Random Access Channel, PRACH), then the UE is in a connected state with the satellite A, and the UE periodically reports a location of the UE to the satellite A. The satellite A determines, based on ephemeris information stored in the satellite A and location information reported by the UE, whether to start a multi-satellite transmission procedure. The satellite A sends configuration information to the UE by using radio resource control (Radio Resource Control, RRC) signaling. In other words, the first network device 120 may send the configuration information, and the terminal device 110 may receive the configuration information. The configuration information includes information about the second network device 140, for example, a PCI and SSB information of a coordinated satellite pre-allocated to the UE. The configuration information may further include an indication of a parameter to be reported by the terminal device 110, for example, a report configuration, a measurement quantity (a measurement parameter configuration, for example, a configuration in which an RSRDC needs to be measured). After receiving the configuration information, the UE detects an SSB of the satellite B, synchronizes with the satellite B, and checks whether a PCI of the satellite B is the same as the PCI of the coordinated satellite pre-allocated to the UE in the configuration information. If the PCI of the satellite B is the same as the PCI of the coordinated satellite pre-allocated to the UE in the configuration information, it indicates that the satellite B is the coordinated satellite pre-allocated to the UE in the configuration information, and the coordinated satellite is a satellite that can exchange information with the satellite A through an inter-satellite link. Then, the PCI of the satellite B is set as an additional PCI (additional PCI). In this process, the UE measures one or more measurement parameters such as the RSRP, the RSRQ, the SINR, and the RSRDC by using an SSS of the satellite B.

The terminal device 110 may report (206) the obtained first directional parameter 201 and second directional parameter 203 to the first network device 120. For example, the UE reports the first RSRDC and the second RSRDC to the satellite A. In some embodiments, the UE may report the first RSRDC and the second RSRDC to the satellite A at the same time. In some other embodiments, the UE may not report the first RSRDC and the second RSRDC to the satellite A at the same time. In an example of obtaining a plurality of measurement parameters, when reporting the first directional parameter 201 and the second directional parameter 203, the terminal device 110 may further report another obtained measurement parameter, for example, report the one or more measurement parameters such as the first RSRP, the first RSRQ, or the first SINR, or report the one or more measurement parameters such as the second RSRP, the second RSRQ, or the second SINR. Refer to the foregoing example. After completing measurement of the RSRP, the RSRQ, the SINRs, and the RSRDCs of the satellite A and the satellite B, the UE reports a measurement result to the satellite A. On a first network device 120 side, the first network device 120 (for example, the satellite A) may receive (208), from the terminal device 110, the first directional parameter 201 and the second directional parameter 203 reported by the terminal device 110. When the terminal device 110 reports a plurality of measurement parameters, correspondingly, the first network device 120 may further receive, from the terminal device 110, parameters such as the one or more of the first RSRP, the first RSRQ, or the first SINR that corresponds to the first network device 120, and the one or more of the second RSRP, the second RSRQ, or the second SINR that corresponds to the second network device 140.

In this embodiment of this disclosure, the terminal device 110 may report the measurement result in a plurality of manners, for example, report in a periodic manner or in an event-triggered manner. An example in which a reporting manner is the periodic manner is that the UE may check whether a timer reaches a reporting periodicity. Specifically, when the timer does not reach the reporting periodicity, the UE does not report the measurement result; and once the timer reaches the reporting periodicity, the UE reports the measurement result. For an example of event-triggered reporting, the terminal device 110 conditionally reports the measurement parameter (the RSRDC, the RSRP, the RSRQ, the SINR, or the like). For example, in some examples, after accessing the first network device 120, the terminal device 110 performs reporting when a trigger condition is satisfied.

In some embodiments, the trigger condition may be determined based on a condition determined based on inter-network device isolation that is determined based on the first RSRDC and the second RSRDC. In some other embodiments, the trigger condition may be determined based on a condition determined based on one or more of the first RSRDC, the first RSRP, the first RSRQ, the first SINR, or the like that corresponds to the first network device 120 and one or more of the second RSRDC, the second RSRP, the second RSRQ, the second SINR, or the like that corresponds to the second network device 140. In some embodiments, a determining manner of the trigger condition may be a combination of the manners mentioned in the foregoing embodiments.

In some embodiments, inter-device isolation may be referred to as inter-satellite isolation, inter-network device isolation, or inter-network apparatus isolation, for example, may be represented by $\delta$, where $\delta = 1 - |d^H(\psi_a)d(\psi_b)|^2$. With reference to the foregoing example, the satellite A is used as an example of the first network device 120, the satellite B is used as the second network device 140, and $\delta$ indicates inter-satellite isolation between the satellite A and the satellite B.

In some embodiments, whether the trigger condition is satisfied may be checked based on a start condition (or referred to as an entering condition of a trigger event, referred to as an entering condition for short) for starting the reporting and an end condition (or referred to as a leaving condition of the trigger event, referred to as a leaving condition for short) for stopping the reporting. Specifically, the trigger condition is satisfied after the start condition for starting the reporting is satisfied and before the end condition for stopping the reporting is satisfied. For example, the UE may determine whether the entering condition or the leaving condition of the trigger event is satisfied. Specifically, when the entering condition is satisfied, the UE reports the measurement result to the satellite A; and when the leaving condition is satisfied, the UE notifies the satellite A that the trigger event no longer occurs, that is, ends reporting.

It should be noted that when the start condition is satisfied, the terminal device 110 starts to perform reporting. Subsequently, even if the start condition is no longer satisfied, the terminal device 110 may continue performing reporting as long as the end condition is not satisfied, and the terminal device 110 stops reporting until it is determined, through check, that the end condition is satisfied.

For convenience, $(\theta_a, \phi_a)$ and $(\theta_b, \phi_b)$ are respectively defined as an AOA of the satellite A and an AOA of the satellite B, $\psi_a = (\psi_{a,x}, \psi_{a,y})$ and $\psi_b = (\psi_{b,x}, \psi_{b,y})$ are respectively defined as the RSRDC of the satellite A and the RSRDC of the satellite B, and $M_a$ and $M_b$ are respectively defined as other measurement parameters of the satellite A and the satellite B other than the RSRDCs. That is, $M_a$ and $M_b$ may be the RSRP, the RSRQ, and the SINRs.

In some examples in which the trigger condition is determined based on the inter-network device isolation that is determined based on the first RSRDC and the second RSRDC, the start condition (entering condition) may be that $\delta + Hys1$ is less than a trigger threshold (denoted as Thresh1 or referred to as a first trigger threshold), and the end condition (leaving condition) may be that $\delta - Hys1$ is greater than the trigger threshold (Thresh1). $\delta$ is the inter-network device isolation that is determined based on the first RSRDC ($\psi_a$) and the second RSRDC ($\psi_b$), and $Hys1$ is a preconfigured or preset hysteresis parameter (first hysteresis parameter). Because multi-satellite transmission is suitable only when the inter-satellite isolation is less than a threshold, resource overheads for reporting by the terminal device 110 can be reduced when the reporting is performed based on the trigger condition. FIG. 4 is a diagram of an example of a start condition and an end condition for reporting.

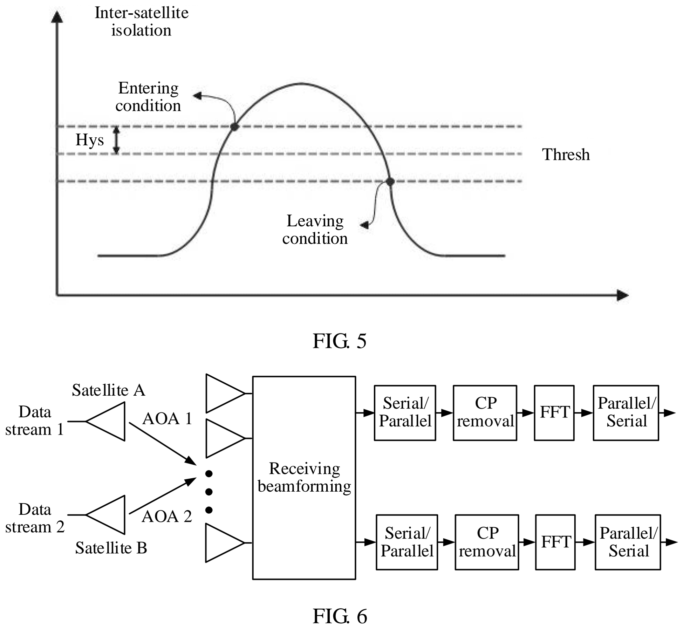

In some other examples in which the trigger condition is determined based on the inter-network device isolation that is determined based on the first RSRDC and the second RSRDC, the start condition may be that $\delta - Hys5$ is greater than a trigger threshold (denoted as Thresh2), and the end condition may be that $\delta + Hys5$ is less than the trigger threshold (Thresh2). $\delta$ is determined based on the first RSRDC ($\psi_a$) and the second RSRDC ($\psi_b$), and $Hys5$ is a preconfigured or preset hysteresis parameter. FIG. 5 is a diagram of an example of a start condition and an end condition for reporting.

The following describes some examples in which the trigger condition may be determined based on the condition determined based on the one or more of the first RSRDC, the first RSRP, the first RSRQ, the first SINR, or the like that corresponds to the first network device 120 and the one or more of the second RSRDC, the second RSRP, the second RSRQ, the second SINR, or the like that corresponds to the second network device 140.

In some embodiments, the start condition is that $M_a + Ofa + Oca - Hys2$ is greater than a first threshold (denoted as Thresh3) and $M_b + Ofb + Ocb - Hys3$ is greater than a second threshold (denoted as Thresh4), and the end condition is that $M_a + Ofa + Oca + Hys2$ is less than the first threshold (Thresh3) or $M_b + Ofb + O_{cb} + Hys3$ is less than the second threshold (Thresh4), where $M_a$ is the one or more of the first RSRP, the first RSRQ, or the first SINR, $M_b$ is the one or more of the second RSRP, the second RSRQ, or the second SINR, $Ofa$ is an offset parameter related to $M_a$, $Ofb$ is an offset parameter related to $M_b$, $Oca$ is an offset parameter related to a cell of the first network device 120 (for example, a cell of the satellite A), $Ocb$ is an offset parameter related to a cell of the second network device 140 (for example, a cell of the satellite B), $Hys2$ is a preconfigured or preset hysteresis parameter (which may be referred to as a second hysteresis parameter), $Hys3$ is a preconfigured or preset hysteresis parameter (which may be referred to as a third hysteresis parameter), and none of $Ofa$, $Ofb$, $Oca$, and $Ocb$ is zero or at least one of $Ofa$, $Ofb$, $Oca$, or $Ocb$ is zero. Both the first threshold and the second threshold are trigger thresholds. $Hys2$ may be greater than, less than, or equal to $Hys3$, and Thresh3 may be greater than, less than, or equal to Thresh4. Because multi-satellite transmission is suitable only when both conditions of a serving satellite (that is, the first network device 120, for example, the satellite A) and a coordinated satellite (that is, the second network device 140, for example, the satellite B) are better than a threshold condition, resource overheads for reporting by the terminal device 110 can be reduced by setting the start condition and the end condition.

In some other embodiments, the start condition is that $M_a + Ofa + Oca + Hys6$ is less than a third threshold (denoted as Thresh5) and $M_b + Ofb + Ocb + Hys7$ is less than a fourth threshold (denoted as Thresh6), and the end condition is that $M_a + Ofa + Oca - Hys6$ is greater than the third threshold (Thresh5) or $M_b + Ofb + Ocb - Hys7$ is greater than the fourth threshold (Thresh6), where $M_a$ is the one or more of the first RSRP, the first RSRQ, or the first SINR, $M_b$ is the one or more of the second RSRP, the second RSRQ, or the second SINR, $Ofa$ is an offset parameter related to $M_a$, $Ofb$ is an offset parameter related to $M_b$, $Oca$ is an offset parameter related to a cell of the first network device 120 (for example, a cell of the satellite A), $Ocb$ is an offset parameter related to a cell of the second network device 140 (for example, a cell of the satellite B), $Hys6$ is a preconfigured or preset hysteresis parameter, and $Hys7$ is a preconfigured or preset hysteresis parameter. Both the first threshold and the second threshold are trigger thresholds. $Hys6$ may be greater than, less than, or equal to $Hys7$, and Thresh5 may be greater than, less than, or equal to Thresh6. None of $Ofa$, $Ofb$, $Oca$, and $Ocb$ is zero or at least one of $Ofa$, $Ofb$, $Oca$, or $Ocb$ is zero.

The trigger condition in this embodiment of this disclosure may alternatively be determined based on a directional cosine distance determined based on the first RSRDC and the second RSRDC. For example, in some examples, the start condition is that $\|\psi_a - \psi_b\|^2 + Hys4$ is less than a trigger threshold (or referred to as a second trigger threshold), and the end condition is that $\|\psi_a - \psi_b\|^2 - Hys4$ is greater than the second trigger threshold, where $\|\psi_a - \psi_b\|^2$ is a directional cosine distance between the first network device 120 and the second network device 140, $\psi_a$, is the first RSRDC, $\psi_b$ is the second RSRDC, and $Hys4$ is a preconfigured or preset hysteresis parameter (fourth hysteresis parameter). Because multi-satellite transmission is suitable only when the directional cosine distance is less than a threshold, resource overheads for reporting by the UE can be reduced based on the trigger condition.

In some other examples, the start condition is that $\|\psi_a - \psi_b\|^2 - Hys8$ is greater than the trigger threshold, and the end condition is that $\|\psi_a - \psi_b\|^2 + Hys8$ is less than the trigger threshold, where $\|\psi_a - \psi_b\|^2$ is the directional cosine distance between the first network device 120 and the second network device 140, $\psi_a$ is the first RSRDC, $\psi_b$ is the second RSRDC, and *Hys8* is a preconfigured or preset hysteresis parameter.

In some examples, the directional cosine distance may be replaced with $\|\psi_a - \psi_b\|^2$, or may be replaced with $\|d(\psi_a) - d(\psi_b)\|^2$.

Specific values of the trigger thresholds mentioned above in the different examples may be the same or different. The configuration information sent by the first network device 120 and received by the terminal device 110 may further include the trigger threshold mentioned in the foregoing example, so that the terminal device 110 can determine, based on the trigger threshold in the configuration information, a trigger condition for reporting a parameter (for example, the first directional parameter 201 or the second directional parameter).

In this embodiment of this disclosure, different measurement parameters are used for defining a trigger event, describing a basic condition of the multi-satellite coordinated transmission, and providing a reference for decision-making on a network side.

On the first network device 120 side, in some examples, the first network device 120 may report (210) the first directional parameter 201 and the second directional parameter 203 to a third network device 130. The first network device 120 may further report, to the network side, the one or more measurement parameters such as the first RSRDC, the first RSRP, the first RSRQ, or the first SINR that corresponds to the first network device 120, and the one or more measurement parameters such as the second RSRDC, the second RSRP, the second RSRQ, or the second SINR that corresponds to the second network device 140. For example, the satellite A receives a measurement report reported by the terminal device 110 (for example, the UE), where a measurement result in the measurement report includes the one or more of the foregoing measurement parameters; and then the satellite A sends the measurement result to the network side. On a third network device 130 side, the third network device 130 receives (212), from the first network device 120, the first directional parameter 201 and the second directional parameter 203 that are obtained by the terminal device 110, and schedules (214), based on the first directional parameter 201 and the second directional parameter 203, the second network device 140 to serve the terminal device 110. For example, the network side schedules a corresponding coordinated satellite for the UE, and notifies the UE of a scheduling result. If the network side has determined that the satellite B is the coordinated satellite of the UE, the satellite A and the satellite B jointly serve the UE on a same time-frequency resource through inter-satellite coordination, and the satellite A and the satellite B send independent data streams. The network side may be specifically a ground base station or a satellite device, and is configured to schedule a coordination satellite. In some examples, the network side may be the third network device 130.

After receiving the scheduling result from the network side (for example, the third network device 130), the terminal device 110 may determine a space domain receiver based on the first directional parameter 201 and the second directional parameter 203. The space domain receiver is configured to receive signals sent by the first network device 120 and the second network device 140. The space domain receiver may be specifically one or more of a space domain matched filter receiver, a space domain zero forcing receiver, or a space domain minimum mean square error receiver. As shown in the foregoing example, after receiving the scheduling result from the network side, the UE designs the space domain receiver based on the measured RSRDC, to suppress inter-satellite interference. For an OFDM system, a sum of a latency difference between a signal sent by the satellite A and a signal sent by the satellite B arriving at the UE and a channel latency spread does not need to be within a CP, and a sum of a Doppler frequency shift difference between a signal sent by the satellite A and a signal sent by the satellite B on the UE side and a Doppler spread does not need to be far less than a subcarrier spacing.

Although there are various methods for implementing the space domain receiver, the RSRDCs of the satellite A and the satellite B are required for design. For ease of description, the RSRDC corresponding to the satellite A is denoted as $\psi_a = (\psi_{a,\,x}, \psi_{a,\,y})$, and a measured value of $\psi_a = (\psi_{a,\,x}, \psi_{a,\,y})$ is denoted as $\tilde{\psi}_a = (\tilde{\psi}_{a,\,x}, \tilde{\psi}_{a,\,y})$. In addition, the RSRDC corresponding to the satellite B is denoted as $\psi_b = (\psi_{b,\,x}, \psi_{b,\,y})$, and a measured value of $\psi_b = (\psi_{b,\,x}, \psi_{b,\,y})$ is denoted as $\tilde{\psi}_b = (\tilde{\psi}_{b,\,x}, \tilde{\psi}_{b,\,y})$. The following describes two example methods for implementing receiving in space domain.

FIG. 6 is a diagram of a receiving procedure in space domain according to some other embodiments of this disclosure. As shown in FIG. 6, a satellite A and a satellite B independently send different signals to a UE on a same time-frequency resource. An AOA at which the signal sent by the satellite A arrives at the UE is denoted as an AOA 1, and an AOA at which the signal sent by the satellite B arrives at the UE is denoted as an AOA 2. After measuring RSRDCs of the satellite A and the satellite B, the UE may directly design receiving beamforming by using the RSRDCs. Specifically, a space domain receiver on a UE side is as follows:

$$W_{MF} = \left[ d\!\left(\tilde{\psi}_a\right) \quad d\!\left(\tilde{\psi}_b\right) \right]^H$$

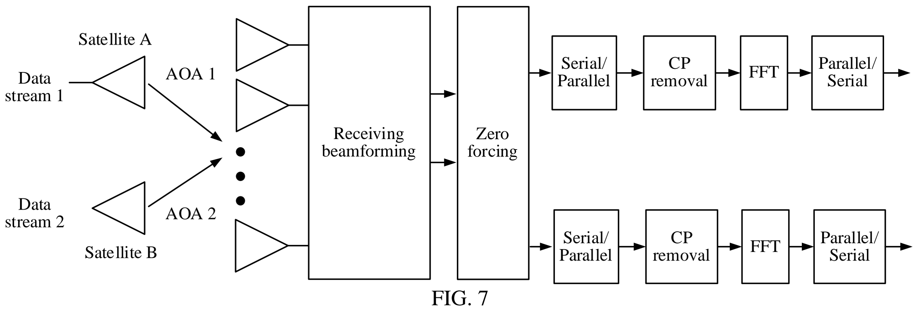

FIG. 7 is a diagram of a receiving procedure in space domain according to some other embodiments of this disclosure. As shown in FIG. 7, a satellite A and a satellite B independently send different signals to a UE on a same time-frequency resource. An AOA at which the signal sent by the satellite A arrives at the UE is denoted as an AOA 1, and an AOA at which the signal sent by the satellite B arrives at the UE is denoted as an AOA 2. After measuring RSRDCs of the satellite A and the satellite B, the UE may perform receiving beamforming by using the RSRDCs, and then perform interference zero forcing. Specifically, a space domain receiver on a UE side may be as follows:

$$W_{ZF} = \begin{bmatrix} 1 & d^H(\widetilde{\psi}_a)d(\widetilde{\psi}_b) \\ d^H(\widetilde{\psi}_b)d(\widetilde{\psi}_a) & 1 \end{bmatrix}^{-1} \begin{bmatrix} d(\widetilde{\psi}_a) & d(\widetilde{\psi}_b) \end{bmatrix}^H$$

Angle of arrival (Angle Of Arrival, AOA) information of line of sight (Line Of Sight, LOS) paths of different satellites is required for implementing the space domain receiver on the UE side. In solutions of embodiments of this disclosure, a new UE measurement parameter, for example, the reference signal received directional cosine (RSRDC), is introduced, and the UE measurement parameter can completely reflect the AOA information. After completing measurement, the UE reports a measurement result to the satellite. Based on the RSRDC, a plurality of trigger events reported based on the measurement may be further defined. A network side schedules a plurality of corresponding serving satellites for the UE based on the measurement result reported by the UE, and notifies the UE. The UE designs the space domain receiver based on the RSRDC, to implement multi-satellite NCJT. To better support the multi-satellite NCJT in satellite communication, it is considered to equip the UE side with a plurality of antennas and a plurality of radio frequency links. Although severe inter-subcarrier interference is generated when signals sent by different satellites arrive at a satellite side, the UE can use the plurality of antennas and the plurality of radio frequency links to design the space domain receiver, to suppress the inter-subcarrier interference, thereby effectively improving multi-satellite NCJT performance.

Based on the solutions in some embodiments above, the UE accesses only the satellite A through the PRACH. Therefore, the UE can report a corresponding measurement result to only the satellite A. Alternatively, in some other embodiments, after synchronizing with the satellite B, the UE may access the satellite B through the PRACH, and report a measurement result to the satellite B. For example, after receiving the measurement configuration information, the UE detects the SSB of the satellite B, synchronizes with the satellite B, and checks whether the PCI of the satellite B is the same as a PCI of an additional satellite pre-allocated to the UE in the measurement configuration information. If the PCI of the satellite B is the same as the PCI of the additional satellite pre-allocated to the UE in the measurement configuration information, it indicates that the satellite B is the additional satellite pre-allocated to the UE in the measurement configuration information. Then, the PCI of the satellite B is set as the additional PCI (additional PCI). In this process, the UE measures the RSRP, the RSRQ, the SINR, and the RSRDC by using the SSS of the satellite B. The UE accesses the satellite B through the PRACH. Then, the UE is in a connected state with the satellite B. If the UE reports the measurement result to the satellite B, after receiving a measurement report reported by the UE, the satellite B may send the measurement result to the network side.

Based on the solutions in some embodiments above, the UE measures parameters such as the RSRP, the RSRQ, the SINR, and the RSRDC by using only the SSS. Alternatively, in some other embodiments, the terminal device 110 may measure the foregoing parameters by using another reference signal. For example, the UE may measure the RSRP, the RSRQ, the SINR, and the RSRDC by using a DMRS or a CSI-RS. Specifically, for example, upon power-on, the UE first detects a synchronization signal block (SSB) of the satellite A, synchronizes with the satellite A, and obtains a physical cell identifier (Physical Cell ID, PCI) of the satellite A. The UE measures reference signal received power (RSRP), (RSRQ), a signal-to-interference-plus-noise ratio (SINR), and an RSRDC by using a demodulation reference signal (Demodulation Reference Signal, DMRS) or a channel state information-reference signal (Channel State Information-Reference Signal, CSI-RS) of the satellite A. After receiving the configuration information, the UE detects the SSB of the satellite B, synchronizes with the satellite B, and checks whether the PCI of the satellite B is the same as the PCI of the coordinated satellite pre-allocated to the UE in the configuration information. If the PCI of the satellite B is the same as the PCI of the coordinated satellite pre-allocated to the UE in the configuration information, it indicates that the satellite B is the coordinated satellite pre-allocated to the UE in the configuration information. Then, the PCI of the satellite B is set as the additional PCI (additional PCI). The UE measures the RSRP, the RSRQ, the SINR, and the RSRDC by using a DMRS or a CSI-RS of the satellite B. The RSRDC and the like are measured by using different reference signals, so that flexible measurement manners can be supported for the parameters such as the RSRDC, and the parameters such as the RSRDC are easy to obtain.

Based on some embodiments above, the UE measures the RSRP, the RSRQ, the SINR, and the RSRDC by using only the SSS, and the UE accesses only the satellite A through the PRACH. Alternatively, in some other embodiments, the UE may measure the RSRP, the RSRQ, the SINR, and the RSRDC by using the DMRS or the CSI-RS, and after being synchronized with the satellite B, the UE may also access the satellite B through the PRACH. In this way, the UE may also report the measurement result to the satellite B. If the UE reports the measurement result to the satellite B, the UE may also report the measurement result to the satellite B. If the UE reports the measurement result to the satellite B, after receiving the measurement report reported by the UE, the satellite B sends the measurement result to the network side. Specifically, for example, upon power-on, the UE first detects the synchronization signal block (SSB) of the satellite A, synchronizes with the satellite A, and obtains the physical cell identifier (PCI) of the satellite A. The UE measures the reference signal received power (RSRP), the reference signal received quality (RSRQ), the signal-to-interference-plus-noise ratio (Signal-to-Interference-plus-Noise Ratio, SINR), and the RSRDC by using the demodulation reference signal (DMRS) or the channel state information-reference signal (CSI-RS) of the satellite A. After receiving the configuration information, the UE detects the SSB of the satellite B, synchronizes with the satellite B, and checks whether the PCI of the satellite B is the same as the PCI of the coordinated satellite pre-allocated to the UE in the configuration information. If the PCI of the satellite B is the same as the PCI of the coordinated satellite pre-allocated to the UE in the configuration information, it indicates that the satellite B is the coordinated satellite pre-allocated to the UE in the configuration information. Then, the PCI of the satellite B is set as the additional PCI (additional PCI). The UE measures the RSRP, the RSRQ, the SINR, and the RSRDC by using the DMRS or the CSI-RS of the satellite B. The UE accesses the satellite B through the PRACH. Then, the UE is in the connected state with the satellite B.

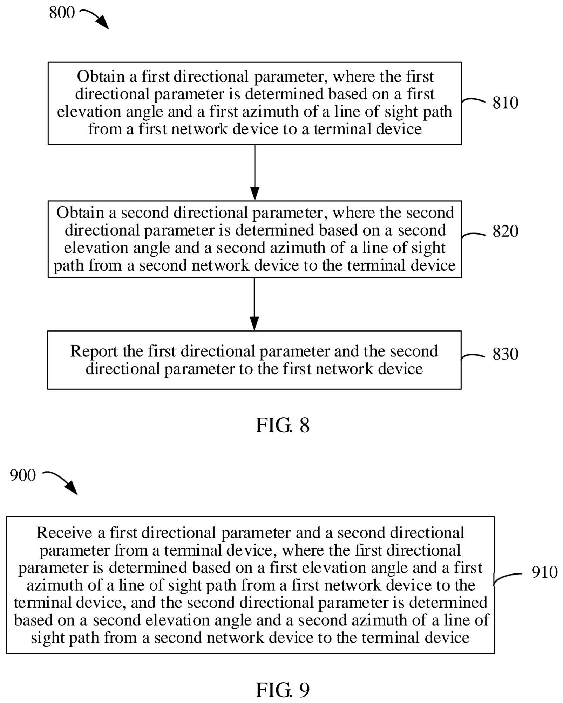

FIG. 8 is a schematic flowchart of implementation at a terminal device 110 according to some embodiments of this disclosure. As shown in FIG. 8, in a procedure 800, in block 810, the terminal device 110 obtains a first directional parameter 201, where the first directional parameter 201 is determined based on a first elevation angle and a first azimuth of a line of sight path from a first network device 120 to the terminal device 110. In block 820, the terminal device 110 obtains a second directional parameter 203, where the second directional parameter 203 is determined based on a second elevation angle and a second azimuth of a line of sight path from a second network device 140 to the terminal device 110. In block 830, the terminal device 110 reports the first directional parameter 201 and the second directional parameter 203 to the first network device 120.

In some embodiments, the first directional parameter 201 is a first reference signal received directional cosine (RSRDC) determined based on the first elevation angle and the first azimuth, and the second directional parameter 203 is a second RSRDC determined based on the second elevation angle and the second azimuth.

In some embodiments, the first directional parameter 201 includes a product of a cosine of the first elevation angle and a cosine of the first azimuth, and a product of the cosine of the first elevation angle and a sine of the first azimuth; and the second directional parameter 203 includes a product of a cosine of the second elevation angle and a cosine of the second azimuth, and a product of the cosine of the second elevation angle and a sine of the second azimuth. With regard to obtaining the first directional parameter 201 and the second directional parameter 203, specifically, the terminal device 110 may obtain the first directional parameter 201 in a process of synchronizing with the first network device 120, and the terminal device 110 may obtain the second directional parameter 203 in a process of synchronizing with the second network device 140.

In a process in which the terminal device 110 may further obtain the first directional parameter 201, the terminal device 110 may further obtain one or more of first reference signal received power (RSRP), first reference signal received quality (RSRQ), or a first signal-to-interference-plus-noise ratio (SINR) that corresponds to the first network device 120. In a process of obtaining the second directional parameter 203, the terminal device 110 may further obtain one or more of second RSRP, second RSRQ, or a second SINR that corresponds to the second network device 140.

In some embodiments, after accessing the first network device 120, the terminal device 110 reports the first RSRDC and the second RSRDC to the first network device 120 when a trigger condition is satisfied. The trigger condition may be determined based on inter-network device isolation that is determined based on the first RSRDC and the second RSRDC, or may be determined based on a condition determined based on at least one of the first RSRDC, the first RSRP, the first RSRQ, or the first SINR that corresponds to the first network device 120 and at least one of the second RSRDC, the second RSRP, the second RSRQ, or the second SINR that corresponds to the second network device 140, or a determining manner of the trigger condition may be a combination of the foregoing two manners.

In addition to reporting the first RSRDC and the second RSRDC, the terminal device 110 may further report at least one of the first RSRP, the first RSRQ, or the first SINR, and at least one of the second RSRP, the second RSRQ, or the second SINR.

The terminal device 110 may receive configuration information from the first network device 120, where the configuration information includes information about the second network device 140. In some examples, the configuration information further includes an indication of a parameter to be reported by the terminal device 110, and the parameter to be reported includes, for example, an RSRDC. In some examples, the configuration information may further include a trigger threshold.

In some embodiments, the trigger condition is satisfied after a start condition for starting the reporting is satisfied and before an end condition for stopping the reporting is satisfied. The following is an example.

In some examples, the start condition is that $\delta + Hys1$ is less than the trigger threshold, and the end condition is that $\delta - Hys1$ is greater than the trigger threshold, where $\delta$ is determined based on the first RSRDC and the second RSRDC, and $Hys1$ is a preconfigured or preset first hysteresis parameter. In some other examples, the trigger threshold includes a first threshold and a second threshold, the start condition is that $M_a + Ofa + Oca - Hys2$ is greater than the first threshold and $M_b$

+$Ofb$+$Ocb$-$Hys3$ is greater than the second threshold, and the end condition is that $M_a$+$Ofa$+$Oca$+$Hys2$ is less than the first threshold or $M_b$+$Ofb$+$Ocb$+$Hys3$ is less than the second threshold, where $M_a$ is at least one of the first RSRP, the first RSRQ, or the first SINR, $M_b$ is at least one of the second RSRP, the second RSRQ, or the second SINR, $Ofa$ is an offset parameter related to $M_a$, $Ofb$ is an offset parameter related to $M_b$, $Oca$ is an offset parameter related to a cell of the first network device 120, $Ocb$ is an offset parameter related to a cell of the second network device 140, $Hys2$ is a preconfigured or preset second hysteresis parameter, $Hys3$ is a preconfigured or preset third hysteresis parameter, and none of $Ofa$, $Ofb$, $Oca$, and $Ocb$ is zero or at least one of $Ofa$, $Ofb$, $Oca$, or $Ocb$ is zero. In some other examples, the start condition is that $\|\psi_a - \psi_b\|^2$+$Hys4$ is less than the trigger threshold, and the end condition is that $\|\psi_a - \psi_b\|^2$-$Hys4$ is greater than the trigger threshold, where $\|\psi_a - \psi_b\|^2$ is a directional cosine distance between the first network device 120 and the second network device 140, $\psi_a$ is the first RSRDC, $\psi_b$ is the second RSRDC, and $Hys4$ is a preconfigured or preset fourth hysteresis parameter.

The terminal device 110 determines a space domain receiver based on the first directional parameter 201 and the second directional parameter 203, where the space domain receiver is configured to receive signals sent by the first network device 120 and the second network device 140.

FIG. 9 is a schematic flowchart of implementation at a first network device 120 according to some embodiments of this disclosure. As shown in FIG. 9, in a procedure 900, in block 910, the first network device 120 receives a first directional parameter 201 and a second directional parameter 203 from a terminal device 110. The first directional parameter 201 is determined based on a first elevation angle and a first azimuth of a line of sight path from the first network device 120 to the terminal device 110, and the second directional parameter 203 is determined based on a second elevation angle and a second azimuth of a line of sight path from a second network device 140 to the terminal device 110.

In some embodiments, the first directional parameter 201 is a first reference signal received directional cosine (RSRDC) determined based on the first elevation angle and the first azimuth, and the second directional parameter 203 is a second RSRDC determined based on the second elevation angle and the second azimuth. For example, the first directional parameter 201 includes a product of a cosine of the first elevation angle and a cosine of the first azimuth, and a product of the cosine of the first elevation angle and a sine of the first azimuth; and the second directional parameter 203 includes a product of a cosine of the second elevation angle and a cosine of the second azimuth, and a product of the cosine of the second elevation angle and a sine of the second azimuth.

In addition to receiving the first RSRDC and the second RSRDC, the first network device 120 may further receive, from the terminal device 110, at least one of first RSRP, first RSRQ, or a first SINR that corresponds to the first network device 120, and at least one of second RSRP, second RSRQ, or a second SINR that corresponds to the second network device 140.

In some embodiments, the first network device 120 may report the first directional parameter 201 and the second directional parameter 203 to a third network device 130. In some other embodiments, in addition to reporting the first directional parameter 201 and the second directional parameter 203, the first network device 120 may further report at least one of the first RSRP, the first RSRQ, or the first SINR, and at least one of the second RSRP, the second RSRQ, or the second SINR to the third network device 130.

The first network device 120 may further send configuration information to the terminal device 110, where the configuration information includes information about the second network device 140. In some examples, the configuration information further includes an indication of a parameter to be reported by the terminal device 110, and the parameter to be reported may include an RSRDC. In some examples, the configuration information may further include a trigger threshold, and the trigger threshold is used by the terminal device 110 to determine a trigger condition for triggering reporting of the first directional parameter 201 and the second directional parameter 203.

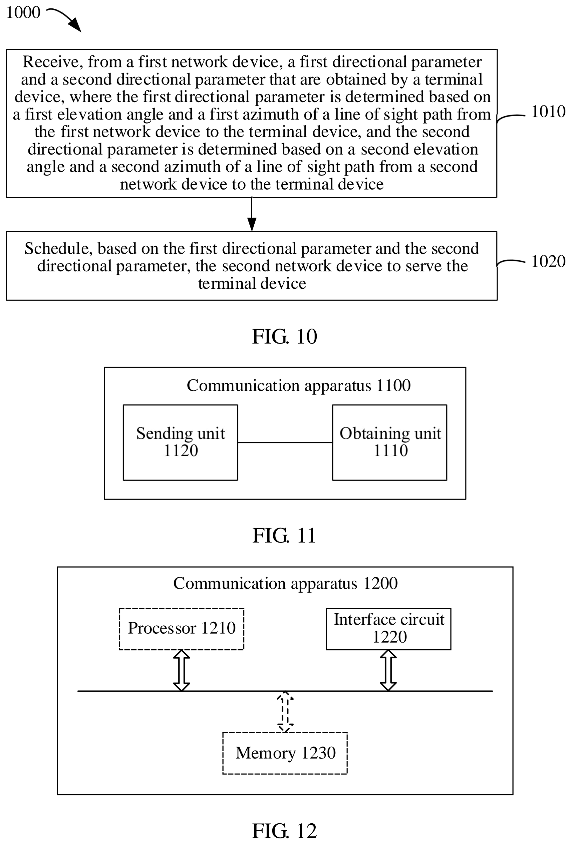

FIG. 10 is a schematic flowchart of implementation at a third network device 130 according to some embodiments of this disclosure. As shown in FIG. 10, in a procedure 1000, in block 1010, the third network device 130 receives, from a first network device 120, a first directional parameter 201 and a second directional parameter 203 that are obtained by a terminal device 110. The first directional parameter 201 is determined based on a first elevation angle and a first azimuth of a line of sight path from the first network device 120 to the terminal device 110, and the second directional parameter 203 is determined based on a second elevation angle and a second azimuth of a line of sight path from a second network device 140 to the terminal device 110. In block 1020, the third network device 130 schedules, based on the first directional parameter 201 and the second directional parameter 203, the second network device 140 to serve the terminal device 110.

FIG. 11 is a diagram of a structure of a possible communication apparatus according to an embodiment of this disclosure. These communication apparatuses can implement functions of the terminal device 110, the first network device 120, or the second network device 140 in the foregoing method embodiments, and therefore can also implement beneficial effects of the foregoing method embodiments. For example, in some embodiments of this disclosure, the communication apparatus may be the terminal device 110 shown in FIG. 1, or may be a module (for example, a chip) used in the terminal device 110.

As shown in FIG. 11, the communication apparatus 1100 includes an obtaining unit 1110 and a sending unit 1120. The communication apparatus may be configured to implement a function of the terminal device 110 in the method embodiment shown in FIG. 8. The obtaining unit 1110 may be a receiver, and the sending unit 1120 may be a transmitter.

When the communication apparatus 1100 is configured to implement the function of the terminal device 110 in the method embodiment shown in FIG. 8, the obtaining unit 1110 is configured to obtain a first directional parameter 201, where the first directional parameter 201 is determined based on a first elevation angle and a first azimuth of a line of sight path from the first network device 120 to the terminal device 110; the obtaining unit 1110 is further configured to obtain a second directional parameter 203, where the second directional parameter 203 is determined based on a second elevation angle and a second azimuth of a line of sight path from the second network device 140 to the terminal device 110; and the sending unit 1120 is configured to report the first directional parameter 201 and the second directional parameter 203 to the first network device 120.

When the communication apparatus 1100 is configured to implement the function of the first network device 120 in the method embodiment shown in FIG. 9, the obtaining unit 1110 in FIG. 11 may be replaced with a receiving unit. The receiving unit is configured to receive a first directional parameter 201 and a second directional parameter 203 from the terminal device 110, where the first directional parameter 201 is determined based on a first elevation angle and a first azimuth of a line of sight path from the first network device 120 to the terminal device 110, and the second directional parameter 203 is determined based on a second elevation angle and a second azimuth of a line of sight path from the second network device 140 to the terminal device 110. The sending unit 1120 may be configured to report the first directional parameter 201 and the second directional parameter 203 to a third network device 130.

When the communication apparatus 1100 is configured to implement the function of a third network device 130 in the method embodiment shown in FIG. 10, the obtaining unit 1110 in FIG. 11 may be replaced with a receiving unit. The receiving unit is configured to receive, from the first network device 120, a first directional parameter 201 and a second directional parameter 203 that are obtained by the terminal device 110, where the first directional parameter 201 is determined based on a first elevation angle and a first azimuth of a line of sight path from the first network device 120 to the terminal device 110, and the second directional parameter 203 is determined based on a second elevation angle and a second azimuth of a line of sight path from the second network device 140 to the terminal device 110. The sending unit 1120 in FIG. 11 may be replaced with a scheduling unit. The scheduling unit is configured to schedule, based on the first directional parameter 201 and the second directional parameter 203, the second network device 140 to serve the terminal device 110.

For more detailed descriptions of the foregoing units, refer to related descriptions in the foregoing method embodiments. Details are not described herein again.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, store input data required by the processor 1210 to run instructions, or store data generated after the processor 1210 runs instructions. It should be noted that, in some embodiments, the processor 1210 and the memory 1230 may be integrated into a same component.

When the communication apparatus 1200 is configured to implement the method in the foregoing method embodiments, the interface circuit 1220 is configured to perform functions of the obtaining unit 1110 and the sending unit 1120.

When the communication apparatus is a chip used in a terminal device 110, the chip in the terminal device 110 implements a function of the terminal device 110 in the foregoing method embodiment. The chip in the terminal device 110 receives information from another module (for example, a radio frequency module or an antenna) in the terminal device 110, where the information may be sent by another terminal device 110. Alternatively, the chip in the terminal device 110 sends information to another module (for example, a radio frequency module or an antenna) in the terminal device 110, where the information is sent to another terminal device 110.

It may be understood that the processor in embodiments of this disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this disclosure provides a communication system. The communication system may include the communication apparatus, for example, the terminal device 110, the first network device 120, or the third network device 130, in the embodiment shown in FIG. 11. Optionally, the terminal device 110, the first network device 120, or the third network device 130 in the communication system may correspondingly perform the communication method shown in FIG. 8, FIG. 9, or FIG. 10.

An embodiment of this disclosure further provides a circuit. The circuit may be coupled to a memory, and may be configured to perform a procedure related to the terminal device 110 or the network devices 120 or 130 in any embodiment shown in the foregoing method embodiments. The chip system may include the chip, and may further include another component like a memory or a transceiver.

It should be understood that the processor mentioned in embodiments of this disclosure may be a CPU, or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this disclosure may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this disclosure. The execution sequences of the processes should be determined based on functions and internal logic of the processes, and should not be construed as any limitation on the implementation processes of embodiments of this disclosure.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In several embodiments provided in this disclosure, it should be understood that the disclosed communication method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this disclosure may be integrated into one processing module, or each of the modules may exist alone physically, or two or more modules are integrated into one module.

When the functions are implemented in a form of a software functional module and sold or used as an independent product, the functions may be stored in a computer-readable storage medium. Based on this understanding, the technical solutions of this disclosure may essentially or contribute to the technical solutions, or a part of the technical solutions may be embodied in a form of a software product. The computer software product is stored in a storage medium, and includes several instructions for instructing a computer device (which may be a personal computer, a server, a network device 130, a network device 140, or the like) to perform all or some of the steps of the methods in embodiments of this disclosure. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". Terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this disclosure, but are not intended to limit the protection scope of embodiments of this disclosure. Any variation or replacement readily figured out by a person skilled in the art within the technical scope disclosed in embodiments of this disclosure shall fall within the protection scope of embodiments of this disclosure. Therefore, the protection scope of embodiments of this disclosure shall be subject to the protection scope of the claims.

## Claims

1. A communication method, comprising:

    obtaining, by a terminal apparatus, a first directional parameter, wherein the first directional parameter is determined based on a first elevation angle and a first azimuth of a line of sight path from a first network apparatus to the terminal apparatus;
    obtaining, by the terminal apparatus, a second directional parameter, wherein the second directional parameter is determined based on a second elevation angle and a second azimuth of a line of sight path from a second network apparatus to the terminal apparatus; and
    reporting, by the terminal apparatus, the first directional parameter and the second directional parameter to the first network apparatus.

2. The method according to claim 1, wherein

    the first directional parameter is a first reference signal received directional cosine (RSRDC) determined based on the first elevation angle and the first azimuth; and
    the second directional parameter is a second RSRDC determined based on the second elevation angle and the second azimuth.

3. The method according to claim 1 or 2, wherein

    the first directional parameter comprises a product of a cosine of the first elevation angle and a cosine of the first azimuth, and a product of the cosine of the first elevation angle and a sine of the first azimuth; and
    the second directional parameter comprises a product of a cosine of the second elevation angle and a cosine of the second azimuth, and a product of the cosine of the second elevation angle and a sine of the second azimuth.

4. The method according to any one of claims 1 to 3, wherein obtaining the first directional parameter and the second directional parameter comprises:

obtaining, by the terminal apparatus, the first directional parameter in a process of synchronizing with the first network apparatus; and
obtaining, by the terminal apparatus, the second directional parameter in a process of synchronizing with the second network apparatus.

5. The method according to any one of claims 1 to 4, further comprising:

in a process of obtaining the first directional parameter, further obtaining, by the terminal apparatus, at least one of first reference signal received power (RSRP), first reference signal received quality (RSRQ), or a first signal-to-interference-plus-noise ratio (SINR) that corresponds to the first network apparatus; and
in a process of obtaining the second directional parameter, further obtaining, by the terminal apparatus, at least one of second RSRP, second RSRQ, or a second SINR that corresponds to the second network apparatus.

6. The method according to any one of claims 2 to 5, wherein after accessing the first network apparatus, the terminal apparatus reports the first RSRDC and the second RSRDC to the first network apparatus when a trigger condition is satisfied.

7. The method according to claim 6, wherein the trigger condition is determined based on at least one of the following:

a condition determined based on inter-network apparatus isolation that is determined based on the first RSRDC and the second RSRDC; or
a condition determined based on at least one of the first RSRDC, the first RSRP, the first RSRQ, or the first SINR that corresponds to the first network apparatus and at least one of the second RSRDC, the second RSRP, the second RSRQ, or the second SINR that corresponds to the second network apparatus.

8. The method according to claim 5 or 7, wherein the terminal apparatus further reports at least one of the following:

at least one of the first RSRP, the first RSRQ, or the first SINR; or
at least one of the second RSRP, the second RSRQ, or the second SINR.

9. The method according to any one of claims 6 to 8, further comprising:
receiving, by the terminal apparatus, configuration information from the first network apparatus, wherein the configuration information comprises information about the second network apparatus.

10. The method according to claim 9, wherein the configuration information further comprises an indication of a parameter to be reported by the terminal apparatus, and the parameter to be reported comprises an RSRDC.

11. The method according to claim 9 or 10, wherein the configuration information further comprises a trigger threshold.

12. The method according to claim 11, wherein the trigger condition is satisfied after a start condition for starting the reporting is satisfied and before an end condition for stopping the reporting is satisfied, wherein

the trigger threshold is a first trigger threshold, the start condition is that $\delta+Hys1$ is less than the first trigger threshold, and the end condition is that $\delta-Hys1$ is greater than the first trigger threshold, wherein $\delta$ is the inter-network apparatus isolation that is determined based on the first RSRDC and the second RSRDC, and $Hys1$ is a preconfigured or preset first hysteresis parameter;
the trigger threshold comprises a first threshold and a second threshold, the start condition is that $M_a+Of_a+O_{ca}-Hys2$ is greater than the first threshold and $M_b+Ofb+Ocb-Hys3$ is greater than the second threshold, and the end condition is that $M_a+Ofa+Oca+Hys2$ is less than the first threshold or $M_b+Ofb+Ocb+Hys3$ is less than the second threshold, wherein $M_a$ is at least one of the first RSRP, the first RSRQ, or the first SINR, $M_b$ is at least one of the second RSRP, the second RSRQ, or the second SINR, $Of a$ is an offset parameter related to $M_a$, $Ofb$ is an offset parameter related to $M_b$, $Oca$ is an offset parameter related to a cell of the first network apparatus, $Ocb$ is an offset parameter related to a cell of the second network apparatus, $Hys2$ is a preconfigured or preset second hysteresis parameter, $Hys3$ is a preconfigured or preset third hysteresis parameter, and none of $Ofa, Ofb, Oca,$ and $Ocb$ is zero or at least one of $Ofa, Ofb, Oca,$ or $Ocb$ is zero; or
the trigger threshold is a second trigger threshold, the start condition is that $\|\psi_a-\psi_b\|^2+Hys4$ is less than the second trigger threshold, and the end condition is that $\|\psi_a-\psi_b\|^2-Hys4$ is greater than the second trigger threshold, wherein $\|\psi_a-\psi_b\|^2$ is a directional cosine distance between the first network apparatus and the second network

apparatus, $\psi_a$ is the first RSRDC, $\psi_b$ is the second RSRDC, and *Hys4* is a preconfigured or preset fourth hysteresis parameter.

13. The method according to any one of claims 1 to 12, further comprising:

   determining, by the terminal apparatus, a space domain receiver based on the first directional parameter and the second directional parameter, wherein the space domain receiver is configured to receive signals sent by the first network apparatus and the second network apparatus, and the space domain receiver is one or more of a space domain matched filter receiver, a space domain zero forcing receiver, or a space domain minimum mean square error receiver.

14. A communication method, comprising:
   receiving, by a first network apparatus, a first directional parameter and a second directional parameter from a terminal apparatus, wherein the first directional parameter is determined based on a first elevation angle and a first azimuth of a line of sight path from the first network apparatus to the terminal apparatus, and the second directional parameter is determined based on a second elevation angle and a second azimuth of a line of sight path from a second network apparatus to the terminal apparatus.

15. The method according to claim 14, wherein

   the first directional parameter is a first reference signal received directional cosine (RSRDC) determined based on the first elevation angle and the first azimuth; and
   the second directional parameter is a second RSRDC determined based on the second elevation angle and the second azimuth.

16. The method according to claim 14 or 15, wherein

   the first directional parameter comprises a product of a cosine of the first elevation angle and a cosine of the first azimuth, and a product of the cosine of the first elevation angle and a sine of the first azimuth; and
   the second directional parameter comprises a product of a cosine of the second elevation angle and a cosine of the second azimuth, and a product of the cosine of the second elevation angle and a sine of the second azimuth.

17. The method according to any one of claims 14 to 16, further comprising:
   reporting, by the first network apparatus, the first directional parameter and the second directional parameter to a third network apparatus.

18. The method according to any one of claims 14 to 17, wherein the first network apparatus further receives, from the terminal apparatus, at least one of first RSRP, first RSRQ, or a first SINR that corresponds to the first network apparatus, and at least one of second RSRP, second RSRQ, or a second SINR that corresponds to the second network apparatus.

19. The method according to claim 18, further comprising:
   reporting, by the first network apparatus, at least one of the first RSRP, the first RSRQ, or the first SINR, and at least one of the second RSRP, the second RSRQ, or the second SINR to the third network apparatus.

20. The method according to any one of claims 14 to 19, further comprising:
   sending, by the first network apparatus, configuration information to the terminal apparatus, wherein the configuration information comprises information about the second network apparatus.

21. The method according to claim 20, wherein the configuration information further comprises an indication of a parameter to be reported by the terminal apparatus, and the parameter to be reported comprises an RSRDC.

22. The method according to claim 20 or 21, wherein the configuration information further comprises a trigger threshold, and the trigger threshold is used by the terminal apparatus to determine a trigger condition for triggering reporting of the first directional parameter and the second directional parameter.

23. A communication method, comprising:

receiving, by a third network apparatus from a first network apparatus, a first directional parameter and a second directional parameter that are obtained by a terminal apparatus, wherein the first directional parameter is determined based on a first elevation angle and a first azimuth of a line of sight path from the first network apparatus to the terminal apparatus, and the second directional parameter is determined based on a second elevation angle and a second azimuth of a line of sight path from a second network apparatus to the terminal apparatus; and

scheduling, by the third network apparatus based on the first directional parameter and the second directional parameter, the second network apparatus to serve the terminal apparatus.

24. A communication apparatus, comprising:

an obtaining unit, configured to obtain a first directional parameter, wherein the first directional parameter is determined based on a first elevation angle and a first azimuth of a line of sight path from a first network apparatus to a terminal apparatus, wherein

the obtaining unit is further configured to obtain a second directional parameter, wherein the second directional parameter is determined based on a second elevation angle and a second azimuth of a line of sight path from a second network apparatus to the terminal apparatus; and

a sending unit, configured to report the first directional parameter and the second directional parameter to the first network apparatus.

25. The apparatus according to claim 24, wherein

the first directional parameter is a first reference signal received directional cosine (RSRDC) determined based on the first elevation angle and the first azimuth; and

the second directional parameter is a second RSRDC determined based on the second elevation angle and the second azimuth.

26. The apparatus according to claim 24 or 25, wherein

the first directional parameter comprises a product of a cosine of the first elevation angle and a cosine of the first azimuth, and a product of the cosine of the first elevation angle and a sine of the first azimuth; and

the second directional parameter comprises a product of a cosine of the second elevation angle and a cosine of the second azimuth, and a product of the cosine of the second elevation angle and a sine of the second azimuth.

27. The apparatus according to any one of claims 24 to 26, wherein the obtaining unit is further configured to:

obtain the first directional parameter in a process in which the terminal apparatus is synchronized with the first network apparatus; and

obtain the second directional parameter in a process in which the terminal apparatus is synchronized with the second network apparatus.

28. The apparatus according to any one of claims 24 to 27, wherein the obtaining unit is further configured to:

in a process of obtaining the first directional parameter, further obtain at least one of first reference signal received power (RSRP), first reference signal received quality (RSRQ), or a first signal-to-interference-plus-noise ratio (SINR) that corresponds to the first network apparatus; and

in a process of obtaining the second directional parameter, further obtain at least one of second RSRP, second RSRQ, or a second SINR that corresponds to the second network apparatus.

29. The apparatus according to any one of claims 25 to 28, wherein the sending unit is further configured to: after the terminal apparatus accesses the first network apparatus, report the first RSRDC and the second RSRDC to the first network apparatus when a trigger condition is satisfied.

30. The apparatus according to claim 29, wherein the trigger condition is determined based on at least one of the following:

a condition determined based on inter-network apparatus isolation that is determined based on the first RSRDC and the second RSRDC; or

a condition determined based on at least one of the first RSRDC, the first RSRP, the first RSRQ, or the first SINR that corresponds to the first network apparatus and at least one of the second RSRDC, the second RSRP, the second RSRQ, or the second SINR that corresponds to the second network apparatus.

31. The apparatus according to claim 28 or 30, wherein the sending unit is further configured to report at least one of the following:

at least one of the first RSRP, the first RSRQ, or the first SINR; or
at least one of the second RSRP, the second RSRQ, or the second SINR.

32. The apparatus according to any one of claims 29 to 31, further comprising a receiving unit, configured to:
receive configuration information from the first network apparatus, wherein the configuration information comprises information about the second network apparatus.

33. The apparatus according to claim 32, wherein the configuration information further comprises an indication of a parameter to be reported by the terminal apparatus, and the parameter to be reported comprises an RSRDC.

34. The apparatus according to claim 32 or 33, wherein the configuration information further comprises a trigger threshold.

35. The apparatus according to claim 34, wherein the trigger condition is satisfied after a start condition for starting the reporting is satisfied and before an end condition for stopping the reporting is satisfied, wherein

the trigger threshold is a first trigger threshold, the start condition is that $\delta+Hys1$ is less than the first trigger threshold, and the end condition is that $\delta-Hys1$ is greater than the first trigger threshold, wherein $\delta$ is the inter-network apparatus isolation that is determined based on the first RSRDC and the second RSRDC, and $Hys1$ is a preconfigured or preset first hysteresis parameter;
the trigger threshold comprises a first threshold and a second threshold, the start condition is that $M_a+Of_a+O_{ca}-Hys2$ is greater than the first threshold and $M_b+Ofb+Ocb-Hys3$ is greater than the second threshold, and the end condition is that $M_a+Ofa+Oca+Hys2$ is less than the first threshold or $M_b+Ofb+Ocb+Hys3$ is less than the second threshold, wherein $M_a$ is at least one of the first RSRP, the first RSRQ, or the first SINR, $M_b$ is at least one of the second RSRP, the second RSRQ, or the second SINR, $Of_a$ is an offset parameter related to $M_a$, $Ofb$ is an offset parameter related to $M_b$, $Oca$ is an offset parameter related to a cell of the first network apparatus, $Ocb$ is an offset parameter related to a cell of the second network apparatus, $Hys2$ is a preconfigured or preset second hysteresis parameter, $Hys3$ is a preconfigured or preset third hysteresis parameter, and none of $Ofa, Ofb, Oca,$ and $Ocb$ is zero or at least one of $Ofa, Ofb, Oca,$ or $Ocb$ is zero; or
the trigger threshold is a second trigger threshold, the start condition is that $\|\psi_a-\psi_b\|^2+Hys4$ is less than the second trigger threshold, and the end condition is that $\|\psi_a-\psi_b\|^2-Hys4$ is greater than the second trigger threshold, wherein $\|\psi_a-\psi_b\|^2$ is a directional cosine distance between the first network apparatus and the second network apparatus, $\psi_a$ is the first RSRDC, $\psi_b$ is the second RSRDC, and $Hys4$ is a preconfigured or preset fourth hysteresis parameter.

36. The apparatus according to any one of claims 24 to 35, further comprising a receiving unit, configured to:
determine a space domain receiver based on the first directional parameter and the second directional parameter, wherein the space domain receiver is configured to receive signals sent by the first network apparatus and the second network apparatus, and the space domain receiver is one or more of a space domain matched filter receiver, a space domain zero forcing receiver, or a space domain minimum mean square error receiver.

37. A communication apparatus, comprising:
a receiving unit, configured to receive a first directional parameter and a second directional parameter from a terminal apparatus, wherein the first directional parameter is determined based on a first elevation angle and a first azimuth of a line of sight path from a first network apparatus to the terminal apparatus, and the second directional parameter is determined based on a second elevation angle and a second azimuth of a line of sight path from a second network apparatus to the terminal apparatus.

38. The apparatus according to claim 37, wherein

the first directional parameter is a first reference signal received directional cosine (RSRDC) determined based on the first elevation angle and the first azimuth; and

the second directional parameter is a second RSRDC determined based on the second elevation angle and the second azimuth.

39. The apparatus according to claim 37 or 38, wherein

the first directional parameter comprises a product of a cosine of the first elevation angle and a cosine of the first azimuth, and a product of the cosine of the first elevation angle and a sine of the first azimuth; and
the second directional parameter comprises a product of a cosine of the second elevation angle and a cosine of the second azimuth, and a product of the cosine of the second elevation angle and a sine of the second azimuth.

40. The apparatus according to any one of claims 37 to 39, further comprising a sending unit, configured to:
report the first directional parameter and the second directional parameter to a third network apparatus.

41. The apparatus according to any one of claims 37 to 40, wherein the receiving unit is further configured to receive, from the terminal apparatus, at least one of first RSRP, first RSRQ, or a first SINR that corresponds to the first network apparatus, and at least one of second RSRP, second RSRQ, or a second SINR that corresponds to the second network apparatus.

42. The apparatus according to claim 41, further comprising the sending unit, configured to:
report at least one of the first RSRP, the first RSRQ, or the first SINR, and at least one of the second RSRP, the second RSRQ, or the second SINR to the third network apparatus.

43. The apparatus according to any one of claims 37 to 42, further comprising a sending unit, configured to:
send configuration information to the terminal apparatus, wherein the configuration information comprises information about the second network apparatus.

44. The apparatus according to claim 43, wherein the configuration information further comprises an indication of a parameter to be reported by the terminal apparatus, and the parameter to be reported comprises an RSRDC.

45. The apparatus according to claim 43 or 44, wherein the configuration information further comprises a trigger threshold, and the trigger threshold is used by the terminal apparatus to determine a trigger condition for triggering reporting of the first directional parameter and the second directional parameter.

46. A communication apparatus, comprising:

a receiving unit, configured to receive, from a first network apparatus, a first directional parameter and a second directional parameter that are obtained by a terminal apparatus, wherein the first directional parameter is determined based on a first elevation angle and a first azimuth of a line of sight path from the first network apparatus to the terminal apparatus, and the second directional parameter is determined based on a second elevation angle and a second azimuth of a line of sight path from a second network apparatus to the terminal apparatus; and
a scheduling unit, configured to schedule, based on the first directional parameter and the second directional parameter, the second network apparatus to serve the terminal apparatus.

47. A communication apparatus, comprising a processor and a memory storing instructions, wherein when the instructions are executed by the processor, the method according to any one of claims 1 to 13, claims 14 to 22, or claim 23 is performed.

48. A communication system, comprising the communication apparatus according to any one of claims 37 to 45, the communication apparatus according to claim 46, and the communication apparatus according to claim 47.

49. A computer-readable storage medium, wherein the computer-readable storage medium stores instructions, and when the instructions are executed, the method according to any one of claims 1 to 13, claims 14 to 22, or claim 23 is performed.

50. A computer program product, wherein the computer program product comprises instructions, and when the instructions are executed, the method according to any one of claims 1 to 13, claims 14 to 22, or claim 23 is performed.

100

120

130

110

FIG. 1A

Inter-satellite
link

Satellite

Satellite

User link

User link

Feeder link

User
terminal

FIG. 1B

200

| 110 | 140 | 120 | 130 |
|---|---|---|---|
| Terminal device | Second network device | First network device | Third network device |

Obtain a first directional parameter — 202

Obtain a second directional parameter — 204

First directional parameter 201 and second directional parameter 203

206 ───────────────────────────────────────► 208

First directional parameter 201 and second directional parameter 203

210 ─ ─ ─ ─ ─ ─ ─ ─► 212

Schedule

◄ ─ ─ ─ ─ ─ ─ ─ ─ ─ ─ ─ ─ ─ 214

FIG. 2

FIG. 3

FIG. 4

FIG. 5

FIG. 6

FIG. 7

800

| Obtain a first directional parameter, where the first directional parameter is determined based on a first elevation angle and a first azimuth of a line of sight path from a first network device to a terminal device | 810 |

| Obtain a second directional parameter, where the second directional parameter is determined based on a second elevation angle and a second azimuth of a line of sight path from a second network device to the terminal device | 820 |

| Report the first directional parameter and the second directional parameter to the first network device | 830 |

FIG. 8

900

| Receive a first directional parameter and a second directional parameter from a terminal device, where the first directional parameter is determined based on a first elevation angle and a first azimuth of a line of sight path from a first network device to the terminal device, and the second directional parameter is determined based on a second elevation angle and a second azimuth of a line of sight path from a second network device to the terminal device | 910 |

FIG. 9

1000 ⟍

| |
|---|
| Receive, from a first network device, a first directional parameter and a second directional parameter that are obtained by a terminal device, where the first directional parameter is determined based on a first elevation angle and a first azimuth of a line of sight path from the first network device to the terminal device, and the second directional parameter is determined based on a second elevation angle and a second azimuth of a line of sight path from a second network device to the terminal device |

⟋ 1010

↓

| |
|---|
| Schedule, based on the first directional parameter and the second directional parameter, the second network device to serve the terminal device |

⟋ 1020

**FIG. 10**

| Communication apparatus 1100 | |
|---|---|
| Sending unit 1120 | Obtaining unit 1110 |

**FIG. 11**

Communication apparatus 1200

Processor 1210     Interface circuit 1220

Memory 1230

**FIG. 12**

## INTERNATIONAL SEARCH REPORT

| International application No. |
|---|
| **PCT/CN2024/085179** |

### A. CLASSIFICATION OF SUBJECT MATTER

H04B 7/185(2006.01)i

According to International Patent Classification (IPC) or to both national classification and IPC

### B. FIELDS SEARCHED

Minimum documentation searched (classification system followed by classification symbols)

IPC: H04B, H04W

Documentation searched other than minimum documentation to the extent that such documents are included in the fields searched

Electronic data base consulted during the international search (name of data base and, where practicable, search terms used)

CNTXT, ENTXTC, WPABSC, DWPI, 3GPP, IEEE: 参考信号接收方向余弦, 第一, 多, 多个, 方位, 方位角, 方向, 方向余弦, 功率, 角, 距离, 卫星, 仰角, 噪比, 质量, RSRDC, TNT, first, plurality, azimuth, direction, power, angle, distance, satellite, elevation, SNR, quality

### C. DOCUMENTS CONSIDERED TO BE RELEVANT

| Category* | Citation of document, with indication, where appropriate, of the relevant passages | Relevant to claim No. |
|---|---|---|
| X | US 10483629 B1 (SILVA OCTAVIO CESAR) 19 November 2019 (2019-11-19) description, column 2, line 41-column 9, line 34 | 1-11, 13-34, 36-50 |
| A | CN 113242085 A (CHONGQING UNIVERSITY OF POSTS AND TELECOMMUNICATIONS) 10 August 2021 (2021-08-10) entire document | 1-50 |
| A | US 2022052756 A1 (TELESAT TECHNOLOGY CORP.) 17 February 2022 (2022-02-17) entire document | 1-50 |
| A | US 2022377640 A1 (THALES AVIONICS, INC.) 24 November 2022 (2022-11-24) entire document | 1-50 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 June 2024** | **11 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/085179**

| Patent document cited in search report | | | Publication date (day/month/year) | Patent family member(s) | | | Publication date (day/month/year) |
|---|---|---|---|---|---|---|---|
| US | 10483629 | B1 | 19 November 2019 | None | | | |
| CN | 113242085 | A | 10 August 2021 | None | | | |
| US | 2022052756 | A1 | 17 February 2022 | EA | 202190746 | A1 | 01 July 2021 |
| | | | | CA | 3112266 | A1 | 19 March 2020 |
| | | | | WO | 2020051685 | A1 | 19 March 2020 |
| | | | | US | 2023344511 | A1 | 26 October 2023 |
| | | | | CA | 3017007 | A1 | 10 March 2020 |
| | | | | AU | 2019338434 | A1 | 13 May 2021 |
| | | | | JP | 2022500928 | A | 04 January 2022 |
| | | | | EP | 3850888 | A1 | 21 July 2021 |
| US | 2022377640 | A1 | 24 November 2022 | WO | 2022245580 | A1 | 24 November 2022 |
| | | | | EP | 4352893 | A1 | 17 April 2024 |

Form PCT/ISA/210 (patent family annex) (July 2022)

**EP 4 693 945 A1**

**Patent documents cited in the description**

- CN 202310490007